# EUROPEAN PATENT SPECIFICATION

(11) **EP 4 387 327 B1**
(45) Date of publication and mention of the grant of the patent: **25.03.2026**
(21) Application number: 22874448.8
(22) Date of filing: 11.08.2022
(51) Int. Cl.: H04W 36/00, H04W 36/08, H04W 36/22, H04W 36/32

(54) **METHOD FOR ADJUSTING INTERFACE BALANCE AND ELECTRONIC DEVICE**
VERFAHREN ZUR ANPASSUNG DES SCHNITTSTELLENGLEICHGEWICHTS UND ELEKTRONISCHE VORRICHTUNG
PROCÉDÉ DE RÉGLAGE DE L'ÉQUILIBRE D'INTERFACE ET DISPOSITIF ÉLECTRONIQUE

(30) Priority: 30.09.2021 CN 202111165894
(43) Date of publication of application: 19.06.2024
(73) Proprietor: Huawei Technologies Co., Ltd., Shenzhen, Guangdong 518129 (CN)
(72) Inventor: CHEN, Minghui, Shenzhen, Guangdong 518129 (CN); QIU, Hongbing, Shenzhen, Guangdong 518129 (CN)
(74) Representative: Epping - Hermann - Fischer
(86) International application number: PCT/CN2022/111767
(87) International publication number: WO 2023/051053

(56) References cited:
- EP-A1- 3 817 455
- CN-A- 103 037 417
- CN-A- 110 831 096
- CN-A- 110 913 504
- CN-A- 111 050 370
- CN-A- 112 714 482
- CN-A- 112 823 544
- CN-A- 113 127 188
- US-A1- 2015 087 307
- US-A1- 2017 078 176
- US-A1- 2020 351 746
- SAMSUNG: "Edge relocation considering user plane lantecy requirement", 3GPP DRAFT; S2-2104575, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting; 20210517 - 20210528, 10 May 2021 (2021-05-10), Mobile Competence Centre ; 650, route des Lucioles ; F-06921 Sophia-Antipolis Cedex ; France , XP052004875

## Description

### TECHNICAL FIELD

This application relates to the field of terminal technologies, and in particular, to a method for adjusting interface balance and an electronic device.

### BACKGROUND

With the development of mobile communication technologies, currently, a data service on an electronic device is mainly carried on a 4th generation (4th generation, 4G) network or a 5th generation (5th generation, 5G) network.

Power consumption of the data service of the electronic device in the 5G network is higher than power consumption of the data service of the electronic device in the 4G network. For example, power consumption generated when a user plays games or watches videos by using the electronic device in the 5G network is usually high. Therefore, the electronic device is more likely to generate heat. When a temperature of the electronic device in the 5G network rises to a preset threshold, currently, a cooling means used by manufacturers is mainly to trigger the electronic device to fall back from the 5G network to the 4G network. If a problem of heat generation of the electronic device still cannot be resolved, a fluency parameter, for example, at least one of resolution, a frequency of a system on chip (system on chip, SOC), a frame rate, or screen brightness, is reduced. However, when a 4G network latency is greater than a 5G network latency, in a conventional technology, when the 5G network falls back to the 4G network, freezing or even disconnection may occur on an interface of the electronic device.

Document US2020351746A1 describes an electronic device may include at least one processor and a sensor module, wherein the at least one processor is configured to, while a first connection to a first network is established based on a first RAT, identify that the electronic device is in over-temperature state based on sensing data from the sensor module, based on identifying that the electronic device is in the over-temperature state, identify whether a specified application is executed or not, based on identifying that the specified application is executed, release the first connection without receiving a connection release message from the first network, after the first connection is released, perform a scan associated with a second RAT different from the first RAT, based on a result of the scan, establish a second connection with a second network different from the first network based on the second RAT. An electronic device comprising at least one processor, wherein the at least one processor is configured to, identify an over-temperature state in a state of being connected to a first RAT, based on the identification of the over-temperature state, identify whether a connection for the first RAT is maintainable, based on identifying that the connection for the first RAT is maintainable, perform at least one first operation corresponding to the over-temperature state while maintaining the connection for the first RAT, and based on identifying that the connection for the first RAT is not maintainable, perform at least one second operation for establishing.

Document US 2015/087307 A1 describes an intelligent radio access control selecting of a first cell device of a first cell layer or a second cell device of a second cell layer or selecting a radio access technology for communication by a mobile device. A device receives information indicative of an access assignment for communication. The access assignment is generated based on a defined criterion, which is associated with a policy of determining a cell layer assignment prior to determining a radio access technology (RAT) assignment. In response to receiving the information, the device can update its configuration to transmit via a transmission parameter based on the information. The cell layer assignment can offload traffic from the first cell device to the second cell device while the RAT assignment can re-assign the device from a first RAT to a second RAT. Assignment can be based on network conditions or mobility state or applications of the device.

### SUMMARY

Embodiments of this application provide a method for adjusting interface balance and an electronic device, to resolve a conventional-technology problem that when the electronic device is cooled down, freezing or even disconnection may occur on an interface of the electronic device.

To achieve the foregoing purpose, the following technical solutions are used in this application. The present invention is defined by the attached set of claims.

According to a first aspect, this application provides a method for adjusting interface balance, applied to an electronic device having a display. The method includes: In response to an operation of enabling a first data service by a user, the electronic device detects a current network. If the current network is a first network, the electronic device obtains a first service latency of running the first data service in the first network by the electronic device, and continuously monitors a first temperature of the electronic device. When the first temperature is greater than a first preset temperature, the electronic device triggers handover from the first network to a second network, and obtains a second service latency of running the first data service in the second network by the electronic device. Network performance of the first network is higher than network performance of the second network. The electronic device determines a network handover policy based on the first service latency and the second service latency.

Based on the foregoing technical solution, when a temperature rise phenomenon occurs when the electronic device runs the first data service in the first network, the electronic device can determine the network handover policy based on latencies of running the first data service in the first network and the second network. Compared with a solution, used in a conventional technology, in which the first network is first reduced to the second network and then a fluency parameter is considered to be reduced, in the method for adjusting interface balance provided in this embodiment of this application, whether to hand over to a network with low network performance can be determined based on the latencies of running the first data service in the first network and the second network, so that freezing or even disconnection that occurs on an interface of the electronic device and that is caused by a network latency increase caused by reducing the first network to the second network when a latency of the first network is less than a latency of the second network can be effectively avoided.

With reference to the first aspect, in a possible implementation, the network handover policy includes a network priority mechanism, and the method further includes: The electronic device triggers handover from the second network to the first network based on the network priority mechanism, and adjusts a fluency parameter. Based on this design, when the network handover policy is the network priority mechanism, the electronic device triggers handover back to the first network with a lower latency, so that freezing or disconnection occurring on the interface of the electronic device can be avoided. In addition, the electronic device resolves a problem of heat generation of the electronic device by adjusting the fluency parameter, thereby avoiding continuous temperature rise of the electronic device.

With reference to the first aspect, in a possible implementation, that the electronic device triggers handover from the second network to the first network based on the network priority mechanism, and adjusts a fluency parameter includes: If the first service latency belongs to a first level latency, and the second service latency belongs to a second level latency or a third level latency, the electronic device triggers handover from the second network to the first network based on the network priority mechanism, and adjusts the fluency parameter. Alternatively, if the first service latency belongs to a second level latency, and the second service latency belongs to a third level latency, the electronic device triggers handover from the second network to the first network based on the network priority mechanism, and adjusts the fluency parameter.

With reference to the first aspect, in a possible implementation, latency levels preset by the electronic device include the first level latency, the second level latency, or the third level latency, where a maximum latency value of the first level latency is less than a minimum latency value of the second level latency, and a maximum latency value of the second level latency is less than a minimum latency value of the third level latency. Based on this design, different latency ranges are divided based on magnitudes of latencies, including the first level latency, the second level latency, or the third level latency, so that the network handover policy can be determined based on level latencies to which the first service latency and the second service latency belong.

With reference to the first aspect, in a possible implementation, that the electronic device triggers handover from the second network to the first network based on the network priority mechanism, and adjusts a fluency parameter includes: If the first service latency is less than the second service latency, and a difference between the second service latency and the first service latency is greater than or equal to a first threshold, the electronic device triggers handover from the second network to the first network based on the network priority mechanism, and adjusts the fluency parameter. Based on this design, the first threshold is set to ensure that the electronic device determines to execute the network priority mechanism only when the first service latency is less than the second service latency and the two latencies are in latency ranges corresponding to different user experience. On the contrary, although the first service latency is less than the second service latency, the two latencies are in a latency range corresponding to same user experience. In this case, the electronic device does not need to execute the network priority mechanism, and does not need to perform subsequent network handover from the second network to the first network, so that frequent network handover can be avoided without affecting user experience.

With reference to the first aspect, in a possible implementation, the method further includes: After the electronic device triggers handover from the second network to the first network based on the network priority mechanism the electronic device continuously monitors a second temperature of the electronic device. When the second temperature is greater than a second preset temperature, the electronic device adjusts the fluency parameter. Based on this design, when the electronic device returns to run the first data service in the first network, if a temperature still rises and is greater than the second preset temperature, the electronic device resolves a problem of heat generation of the electronic device by adjusting the fluency parameter, thereby avoiding continuous temperature rise of the electronic device.

With reference to the first aspect, in a possible implementation, the method further includes: After the electronic device triggers handover from the second network to the first network based on the network priority mechanism, the electronic device continuously monitors a second temperature of the electronic device. When the second temperature is greater than a second preset temperature and is less than a third preset temperature, the electronic device adjusts the fluency parameter. Alternatively, when the second temperature is greater than or equal to a third preset temperature, the electronic device riggers handover from the first network to the second network; or the electronic device triggers handover from the first network to the second network, and adjusts the fluency parameter. Based on this design, when the electronic device returns to run the first data service in the first network, if a temperature still rises and is greater than or equal to the third preset temperature after the fluency parameter is adjusted for a plurality of times, the electronic device triggers handover from the first network to the second network, to effectively cool down the electronic device.

With reference to the first aspect, in a possible implementation, the network handover policy further includes a fluency priority mechanism, and the method further includes: the electronic device runs the first data service in the second network based on the fluency priority mechanism. Based on this design, after the network handover policy determined by the electronic device is the fluency priority mechanism, the electronic device stays in the second network with a lower latency, so that freezing or disconnection occurring on the interface of the electronic device can be avoided. With reference to the first aspect, in a possible implementation, if the second service latency belongs to a first level latency, and the first service latency belongs to a second level latency or a third level latency, the electronic device runs the first data service in the second network based on the fluency priority mechanism; or if the second service latency belongs to a second level latency, and the first service latency belongs to a third level latency, the electronic device runs the first data service in the second network based on the fluency priority mechanism.

With reference to the first aspect, in a possible implementation, that the electronic device runs the first data service in the second network based on the fluency priority mechanism includes: If the first service latency is greater than the second service latency, and a difference between the first service latency and the second service latency is greater than or equal to a first threshold, the electronic device runs the first data service in the second network based on the fluency priority mechanism.

With reference to the first aspect, in a possible implementation, the method further includes: When the electronic device runs the first data service in the second network based on the fluency priority mechanism, the electronic device continuously monitors a third temperature of the electronic device. When the third temperature is greater than a fourth preset temperature, the electronic device adjusts a fluency parameter. Based on this design, after the network handover policy determined by the electronic device is the fluency priority mechanism, the electronic device stays in the second network with a lower latency to run the first data service. If a temperature still rises and is greater than the fourth preset temperature, the electronic device effectively cools down the electronic device by adjusting the fluency parameter.

With reference to the first aspect, in a possible implementation, adjusting a fluency parameter includes reducing a value of the fluency parameter.

With reference to the first aspect, in a possible implementation, the fluency parameter includes at least one of a frame rate corresponding to an interface of the first data service, video resolution corresponding to an interface of the first data service, or a frequency of a processor of the electronic device.

With reference to the first aspect, in a possible implementation, the network handover policy includes the network priority mechanism or the fluency priority mechanism. The method further includes: The electronic device displays a pop-up box to prompt a user to select the network priority mechanism or the fluency priority mechanism. Based on this design, human-machine interaction can be increased, thereby improving user experience.

According to a second aspect, an embodiment of this application provides an electronic device, including a processor, a memory, and a display. The memory and the display are coupled to the processor, the memory is configured to store computer program code, and the computer program code includes computer instructions. When the processor reads the computer instructions from the memory, the electronic device is enabled to perform the method according to the first aspect and any one of the designs of the first aspect.

According to a third aspect, an embodiment of this application provides an electronic device. The electronic device has a function of implementing the method according to the first aspect and any one of the designs of the first aspect. The function may be implemented by hardware, or may be implemented by executing corresponding software by hardware. The hardware or the software includes one or more modules corresponding to the foregoing function.

According to a fourth aspect, an embodiment of this application provides a computer-readable storage medium. The computer-readable storage medium stores a computer program or instructions, and when the computer program or the instructions are run on a computer, the computer is enabled to perform the method according to the first aspect and any one of the designs of the first aspect.

According to a fifth aspect, a chip system is provided. The chip system includes a processor and a memory. The memory stores computer program code, and when the computer program code is executed by the processor, the method according to any one of the possible implementations of the first aspect is implemented. The chip system may include a chip, or may include a chip and another discrete component.

According to a sixth aspect, an embodiment of this application provides a computer program product. The computer program product includes a computer program or instructions, and when the computer program or the instructions are run on a computer, the computer is enabled to perform the method according to the first aspect and any one of the designs of the first aspect.

It should be noted that, for technical effect brought by any one of the designs of the second aspect to the sixth aspect, refer to technical effect brought by a corresponding design of the first aspect. Details are not described herein again.

### BRIEF DESCRIPTION OF DRAWINGS

FIG. 1 is a schematic diagram 1 of a structure of an electronic device according to an embodiment of this application;
FIG. 2 is a schematic diagram 2 of a structure of an electronic device according to an embodiment of this application;
FIG. 3 is a flowchart 1 of a method for adjusting interface balance according to an embodiment of this application;
FIG. 4A is a schematic diagram 1 of an application scenario of a method for adjusting interface balance according to an embodiment of this application;
FIG. 4B is a schematic diagram 2 of an application scenario of a method for adjusting interface balance according to an embodiment of this application;
FIG. 5A is a schematic diagram 3 of an application scenario of a method for adjusting interface balance according to an embodiment of this application;
FIG. 5B is a schematic diagram 4 of an application scenario of a method for adjusting interface balance according to an embodiment of this application;
FIG. 6A is a schematic diagram 5 of an application scenario of a method for adjusting interface balance according to an embodiment of this application;
FIG. 6B is a schematic diagram 6 of an application scenario of a method for adjusting interface balance according to an embodiment of this application;
FIG. 6C is a schematic diagram 7 of an application scenario of a method for adjusting interface balance according to an embodiment of this application;
FIG. 7A is a flowchart 2 of a method for adjusting interface balance according to an embodiment of this application;
FIG. 7B is a flowchart 3 of a method for adjusting interface balance according to an embodiment of this application;
FIG. 8A is a schematic diagram 8 of an application scenario of a method for adjusting interface balance according to an embodiment of this application;
FIG. 8B is a schematic diagram 9 of an application scenario of a method for adjusting interface balance according to an embodiment of this application;
FIG. 8C is a schematic diagram 10 of an application scenario of a method for adjusting interface balance according to an embodiment of this application;
FIG. 9 is a flowchart 4 of a method for adjusting interface balance according to an embodiment of this application;
FIG. 10A is a schematic diagram 11 of an application scenario of a method for adjusting interface balance according to an embodiment of this application;
FIG. 10B is a schematic diagram 12 of an application scenario of a method for adjusting interface balance according to an embodiment of this application;
FIG. 11 is a schematic diagram 13 of an application scenario of a method for adjusting interface balance according to an embodiment of this application;
FIG. 12 is a schematic diagram 14 of an application scenario of a method for adjusting interface balance according to an embodiment of this application; and
FIG. 13 is a schematic diagram 3 of a structure of an electronic device according to an embodiment of this application.

### DESCRIPTION OF EMBODIMENTS

With reference to the accompanying drawings, the following describes in detail a method for adjusting interface balance and an electronic device that are provided in embodiments of this application.

Terms "including", "having", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device.

It should be noted that in embodiments of this application, words such as "example" or "for example" are used to represent giving an example, an illustration, or a description. Any embodiment or design solution described as an "example" or "for example" in embodiments of this application should not be explained as being more preferred or having more advantages than another embodiment or design solution. To be precise, the words such as "example" or "for example" are intended to present a related concept in a specific manner.

In the descriptions of this application, unless otherwise specified, "a plurality of" means two or more than two. A term "and/or" in this specification describes only an association relationship between associated objects and indicates that there may be three relationships. For example, A and/or B may represent the following three cases: Only A exists, both A and B exist, and only B exists.

It should be noted that, in embodiments of this application, interface balance is fluency, definition, comfort, and the like of a visual interface, and may be represented by using parameters such as a network latency, image quality, resolution, screen brightness, a frequency of a processor, and a frame rate. A fluency parameter is a parameter that is of an electronic device and that is related to interface fluency, for example, image quality, resolution, screen brightness, a frequency of a processor, and a frame rate. Unified descriptions are provided herein and details are not described below again.

It should be noted that, in embodiments of this application, a fluency priority mechanism is a mechanism in which a network is first handed over from a first network with high network performance to a second network with low network performance, and then a fluency parameter is adjusted. A network priority mechanism is a mechanism in which a fluency parameter is first adjusted, and then a network is handed over from a first network to a second network. In the network priority mechanism, an electronic device preferentially runs a service in the first network with high network performance. Therefore, the network priority mechanism may alternatively be referred to as a network performance priority mechanism or a first network priority mechanism. Unified descriptions are provided herein and details are not described below again.

As described in the background, in a conventional technology, the fluency priority mechanism is used to resolve a problem of heat generation of the electronic device. Base station constructions of 5G and 4G networks are different. To be specific, there is an environment in which a 4G network latency is greater than a 5G network latency, and there is also an environment in which a 4G network latency is less than a 5G network latency. Therefore, in the environment in which the 4G network latency is greater than the 5G network latency, a network latency increases by using the fluency priority mechanism. As a result, freezing occurs on a game or video interface of the electronic device, or even a game cannot continue to be played or a video cannot continue to be watched, thereby affecting user experience.

Therefore, to resolve the foregoing technical problem, embodiments of this application provide a method for adjusting interface balance and an electronic device. The method includes: in response to an operation of starting a first data service by a user, the electronic device detects a current network; if the current network is a first network, the electronic device obtains a first service latency of running the first data service in the first network by the electronic device, and continuously monitors a first temperature of the electronic device; when the first temperature is greater than a first preset temperature, the electronic device triggers handover from the first network to a second network, and obtains a second service latency of running the first data service in the second network by the electronic device, where network performance of the first network is higher than network performance of the second network; and the electronic device determines a network handover policy based on the first service latency and the second service latency. Specific implementations and technical effect of the solution are described in detail in subsequent method embodiments, and details are not described herein again.

As described above, the method for adjusting interface balance provided in embodiments of this application may be applied to an electronic device 100, or may be applied to a system including an electronic device 100.

Optionally, the electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, or a wearable device. A specific type of the electronic device 100 is not limited in embodiments of this application.

The following uses an example in which the electronic device 100 is the mobile phone for description.

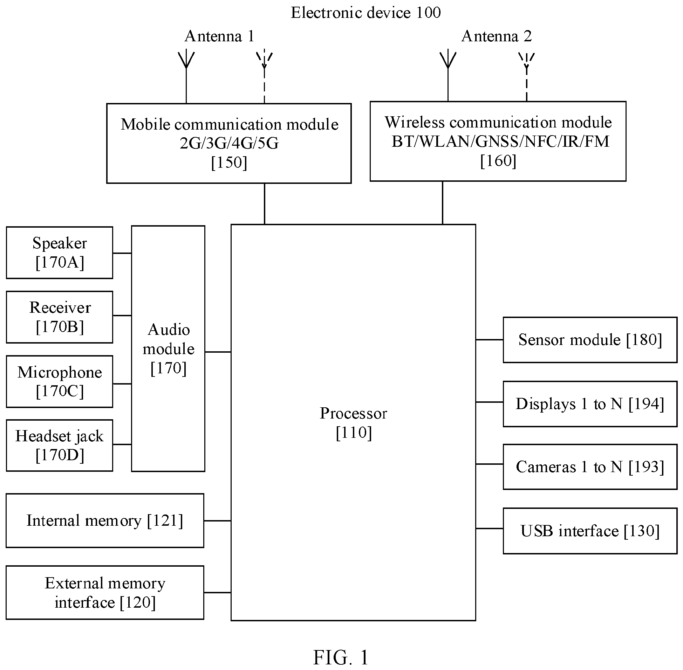

For example, FIG. 1 is a schematic diagram of a hardware structure of the electronic device 100. As shown in FIG. 1, the electronic device 100 may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It can be understood that the structure shown in this embodiment of the present invention does not constitute a specific limitation on the mobile phone. In some other embodiments of this application, the mobile phone may include more or fewer components than those shown in the figure, or combine some components, or split some components, or have different component arrangements.

The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instruction or the data again, the processor may directly invoke the instruction or the data from the memory. This avoids repeated access, reduces waiting time of the processor 110, and improves system efficiency.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands. Different antennas may be further multiplexed, to improve antenna utilization. For example, the antenna 1 may be multiplexed as a diversity antenna in a wireless local area network. In some other embodiments, the antennas may be used in combination with a tuning switch.

The mobile communication module 150 may provide a wireless communication solution including 2G/3G/4G/5G, or the like applied to the mobile phone. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the mobile phone and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the mobile phone are coupled, and the antenna 2 and the wireless communication module 160 in the mobile phone are coupled, so that the mobile phone can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite-based augmentation system, SBAS).

The mobile phone implements a display function by using the GPU, a display 194, the application processor, and the like. The GPU is a microprocessor for image processing and is connected to the display 194 and the application processor. The GPU is configured to perform mathematical and geometric computation and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone may include one or N displays 194, where N is a positive integer greater than 1.

The mobile phone may implement a photographing function by using the ISP, a camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD), or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In some embodiments, the mobile phone may include one or N cameras 193, where N is a positive integer greater than 1.

The digital signal processor is configured to process a digital signal, and may process another digital signal in addition to the digital image signal. For example, when the mobile phone selects a frequency, the digital signal processor is configured to perform Fourier transformation on frequency energy.

The video codec is configured to compress or decompress a digital video. The mobile phone may support one or more video codecs. In this way, the mobile phone can play or record videos in a plurality of coding formats, for example, moving picture experts group (moving picture experts group, MPEG)-1, MPEG-2, MPEG-3, and MPEG-4.

The external memory interface 120 may be configured to be connected to an external storage card, for example, a micro SD card, to extend a storage capability of the mobile phone. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 executes various function applications and data processing of the mobile phone by running the instructions stored in the internal memory 121. The internal memory 121 may include a program storage region and a data storage region. The program storage region may store an operating system, an application required by at least one function (for example, a sound play function and an image play function), and the like. The data storage area may store data (such as audio data and contacts) created during use of the mobile phone, and the like. In addition, the internal memory 121 may include a high-speed random access memory, and may further include a nonvolatile memory, for example, at least one magnetic disk storage device, a flash storage device, and a universal flash storage (universal flash storage, UFS).

The mobile phone may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The mobile phone may listen to music or answer a hands-free call by using the speaker 170A.

The receiver 170B, also referred to as an "earpiece", is configured to convert an electrical audio signal into a sound signal. When the mobile phone answers a call or receives a voice message, the receiver 170B may be put close to a human ear to receive voice.

The microphone 170C, also referred to as a "mike" or a "microphone", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile phone. In some other embodiments, two microphones 170C may be disposed in the mobile phone, to collect a sound signal and further implement a noise reduction function. In some other embodiments, three, four, or more microphones 170C may alternatively be disposed in the mobile phone, to collect a sound signal, implement noise reduction, identify a sound source, implement a directional recording function, and the like.

The headset jack 170D is configured to be connected to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

Certainly, the mobile phone may further include a charging management module, a power management module, a battery, a button, an indicator, one or more SIM card interfaces, and the like. This is not limited in this embodiment of this application.

In addition, a software system of the electronic device may use a layered architecture, an event-driven architecture, a microkernel architecture, a microservice architecture, or a cloud architecture. For example, an operating system of a smartphone may be Android (Android), iOS, Symbian, Harmony (Harmony), or another terminal operating system. In this embodiment of this application, only an Android system with a layered architecture is used as an example to describe a software structure of the electronic device. The following schematic software architecture does not constitute a specific limitation on the electronic device.

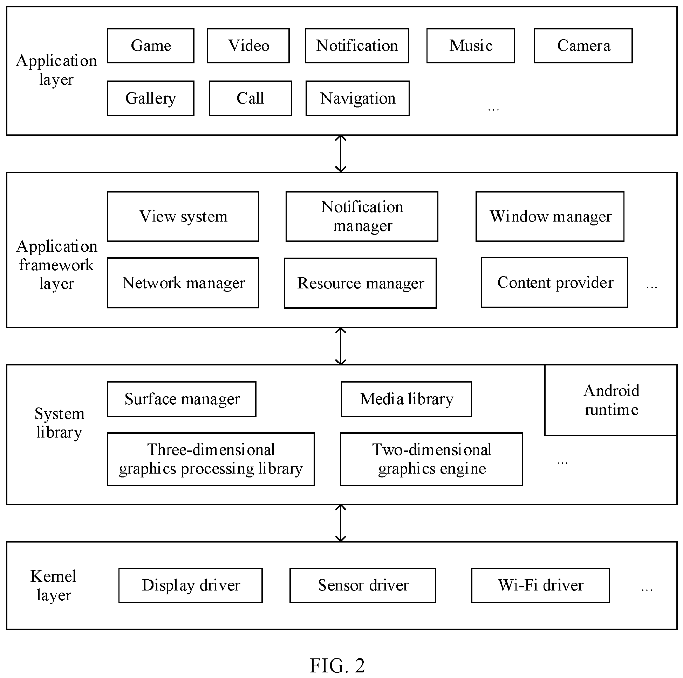

For example, FIG. 2 is a schematic diagram of a software structure of the electronic device 100. In a layered architecture, software is divided into several layers, and each layer has a clear role and task. The layers communicate with each other through a software interface. In some embodiments, the Android system is divided into four layers from top to bottom: an application layer, an application framework layer, an Android runtime (Android runtime) and system library, and a kernel layer.

The application layer may include a series of application packages. As shown in FIG. 2, the application package may include applications such as Game, Video, Map, Music, Camera, Gallery, Call, Navigation, Calendar, WLAN, Bluetooth, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The view system includes visual controls such as a control for displaying text and a control for displaying a picture. The view system may be configured to construct an application. A display interface may include one or more views. For example, a display interface including a short message notification icon may include a view for displaying text and a view for displaying a picture.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application that is run on the background or a notification that appears on a screen in a form of a dialog window. For example, text information is displayed in the status bar, an alert sound is played, the electronic device vibrates, or the indicator light blinks.

The window manager is configured to manage a window program. The window manager may obtain a size of a display, determine whether there is a status bar, perform screen locking, take a screenshot, and the like.

The network manager is configured to determine a network standard in which the electronic device is run, for example, determine that the electronic device is run in a 5G network, a 4G network, or a 3G network.

The resource manager provides various resources such as a localized character string, an icon, a picture, a layout file, and a video file for an application. The resource manager is further configured to implement functions of determining and making a decision. The content provider is configured to store and obtain data, and enable the data to be accessed by an application. The data may include a video, an image, audio, calls that are made and answered, a browsing history and bookmarks, an address book, and the like.

The Android runtime includes a kernel library and a virtual machine. The Android runtime is responsible for scheduling and management of the Android system. The kernel library includes two parts: a function that needs to be invoked in a Java language and a kernel library of Android. The application layer and the application framework layer run on the virtual machine. The virtual machine executes Java files of the application layer and the application framework layer as binary files. The virtual machine is configured to implement functions such as object lifecycle management, stack management, thread management, security and abnormality management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provides the merging of 2D and 3D layers for a plurality of applications.

The media library supports playback and recording in a plurality of commonly used audio and video formats, static image files, and the like. The media library may support a plurality of audio and video encoding formats, such as MPEG-4, H.264, MP3, AAC, AMR, JPG, or PNG.

The three-dimensional graphics processing library is configured to implement three-dimensional graphics drawing, image rendering, compositing, layer processing, and the like. The 2D graphics engine is a drawing engine for 2D drawing.

The kernel layer is a layer between hardware and software. The kernel layer includes at least a display driver, a sensor driver, a Wi-Fi driver, a camera driver, and an audio driver.

All methods in the following embodiments may be implemented in the electronic device 100 having the hardware structure shown in FIG. 1 and the software structure shown in FIG. 2. With reference to FIG. 1 and FIG. 2, the following describes in detail the method for adjusting interface balance provided in embodiments of this application.

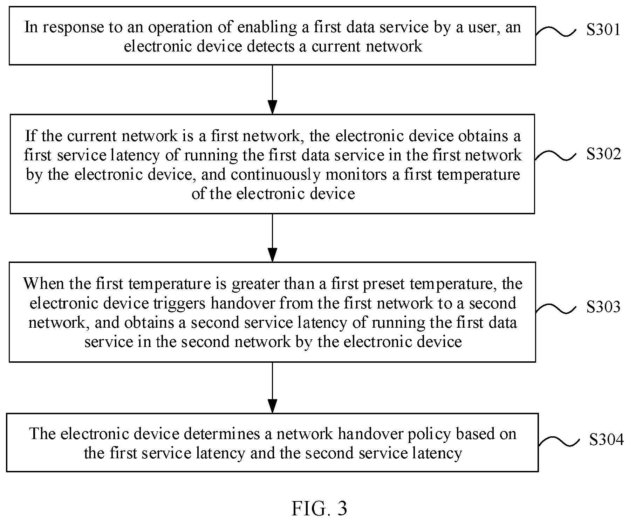

FIG. 3 shows a method for adjusting interface balance according to an embodiment of this application. The method for adjusting interface balance includes the following steps.

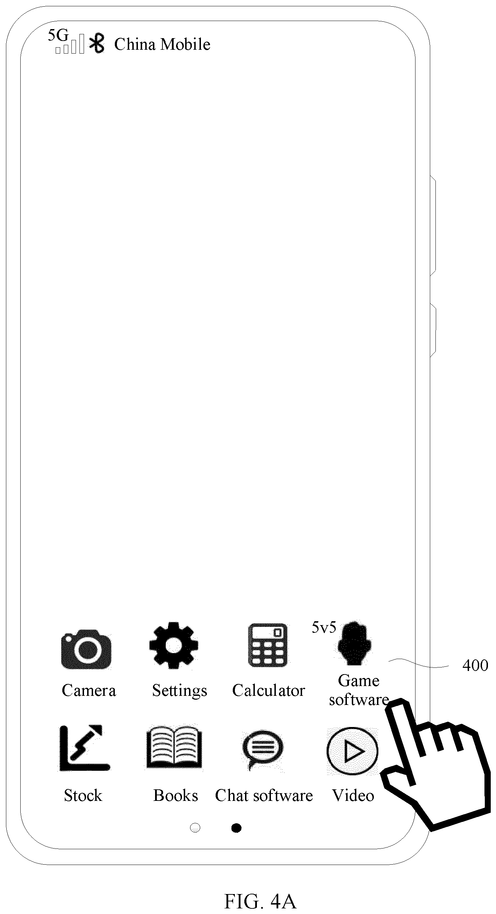

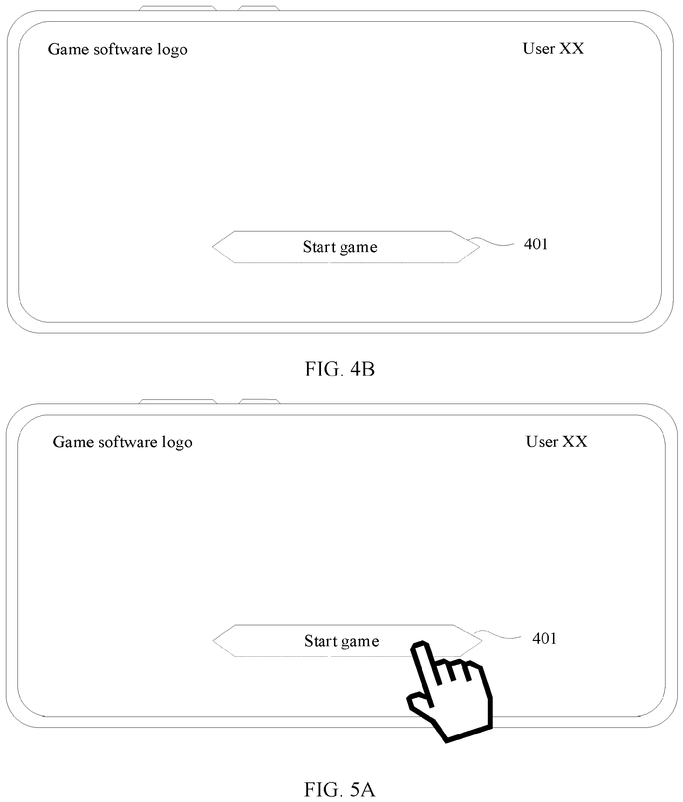

S301: In response to an operation of enabling a first data service by a user, an electronic device detects a current network. For example, the first data service is a game service. As shown in FIG. 4A, the operation of enabling the first data service by the user may be tapping an icon 400 of game software by the user. The electronic device enters an interface shown in FIG. 4B. The interface may include a logo (logo type, logo) of the game software, a user name, and a "Start game" button 401.

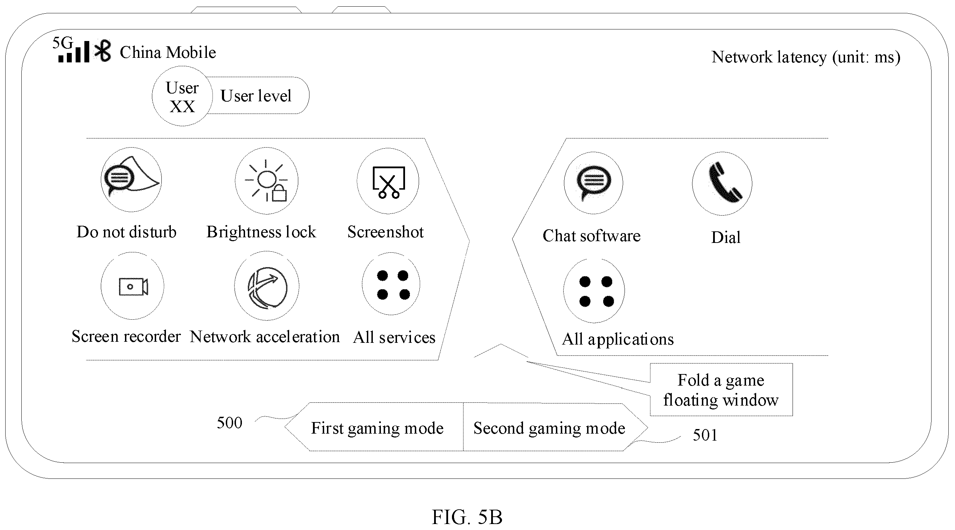

In some embodiments of this application, the operation of enabling the first data service by the user may be that the user taps the "Start game" button 401 in FIG. 5A, as shown in FIG. 5A. The electronic device enters an interface shown in FIG. 5B. The interface may include a user name, a user level, a network latency, a game floating window, an icon for folding the game floating window, a "First gaming mode" button 500, and/or a "Second gaming mode" button 501. The network latency is in a unit of ms. Not every game displays a value of the network latency on a game interface. The game floating window may include icons of "Do not disturb", "Brightness lock", "Screenshot", "Screen recorder", "Network acceleration", and "All services", and icons of "Chat software", "Dial", or "All applications". The interface may display two types of game modules for the user to select. The interface may further provide a single game module or at least two gaming modes. This is not limited in this embodiment of this application.

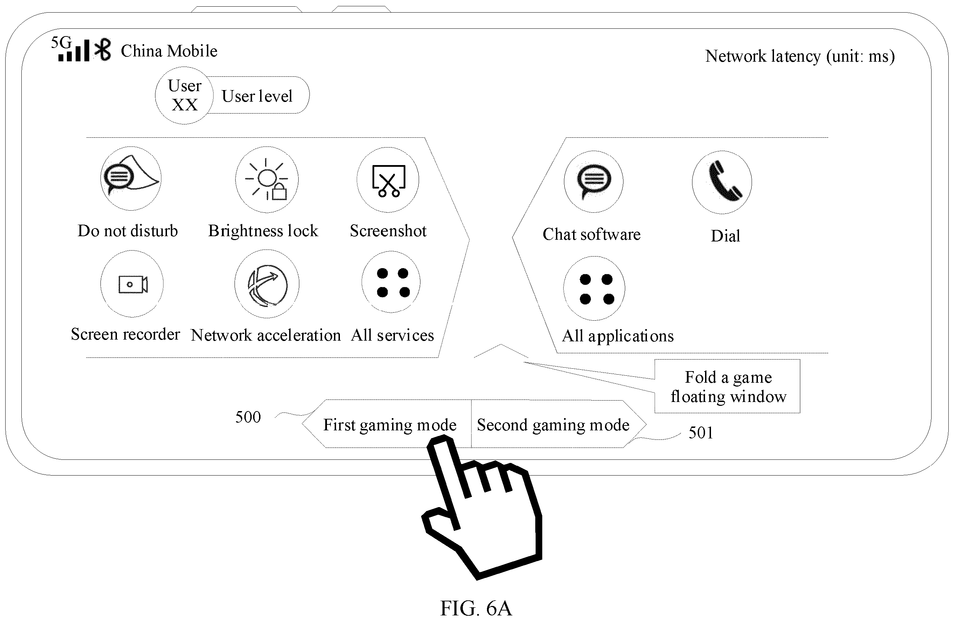

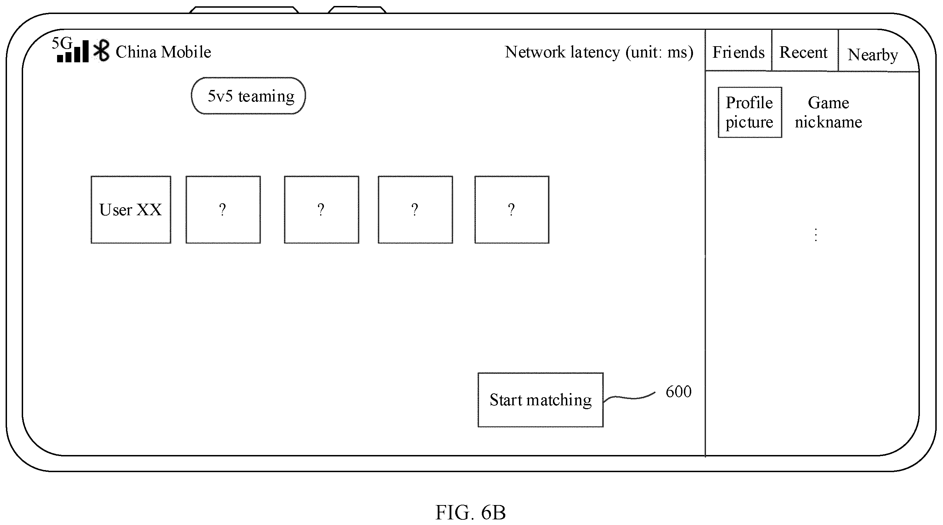

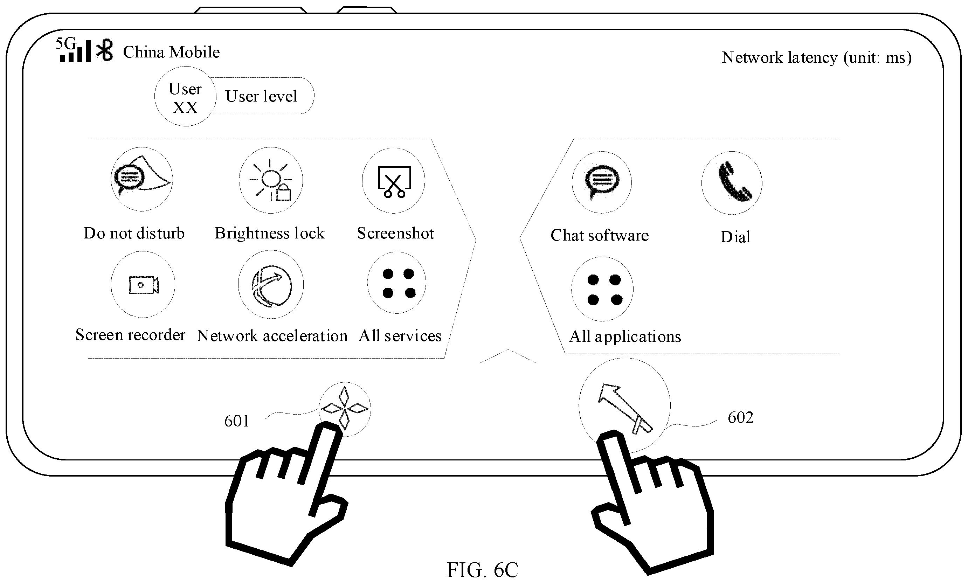

In some embodiments of this application, as shown in FIG. 6A, the user taps the "First gaming mode" button 500 in FIG. 6A. The user may perform settings such as forming a team and selecting a quantity of members in each team by operating the electronic device. For example, as shown in FIG. 6B, the user may select, on a right side of the interface, a friend, a recent teammate, and/or another player nearby to fill four vacant locations in the center of the interface, to form a five-person team. The user enters a game interface shown in FIG. 6C. The user may control a moving direction of a game character by operating an icon 601 with a left hand, and the user may wave a sword or shoot by operating an icon 602 with a right hand. Alternatively, the operation of enabling the first data service by the user may be a last setting operation before the game interface shown in FIG. 6C is entered. For example, the user taps a "Start matching" button 600. This is not specifically limited in this embodiment of this application.

It should be noted that detection of the current network by the electronic device may be triggered by the operation of enabling the first data service by the user, or may be triggered in a process of running the first data service. For example, the detection of the current network by the electronic device is triggered in a process of playing a game or playing a video shown in FIG. 6B. This is not limited in this embodiment of this application.

With reference to FIG. 1 and FIG. 2, step S301 may be implemented in the following manner: A touch sensor in the sensor module receives the operation of enabling the first data service by the user, and the mobile communication module detects the current network.

S302: The electronic device detects that the current network is a first network, and the electronic device obtains a first service latency of running the first data service in the first network by the electronic device, and continuously monitors a first temperature of the electronic device. In this embodiment of this application, a temperature of the electronic device may be a housing temperature, a system temperature, a central processing unit (central processing unit, CPU) temperature, a screen temperature, a chip temperature, or the like of the electronic device. This is not limited in this embodiment of this application.

In some embodiments of this application, the electronic device may further obtain an identity (identity, ID) of a first network cell in which the electronic device is located currently.

With reference to FIG. 1 and FIG. 2, step S302 may be implemented in the following manner: The mobile communication module sends collected network information to the network manager, and the network manager determines that the current network is the first network. The mobile communication module obtains the first service latency, and the mobile communication module may further send the obtained first service latency to a game application, to display the first service latency on a game interface. The temperature sensor in the sensor module continuously monitors the first temperature of the electronic device.

S303: When the first temperature is greater than a first preset temperature, the electronic device triggers handover from the first network to a second network, and obtains a second service latency of running the first data service in the second network by the electronic device, where network performance of the first network is higher than network performance of the second network. In some embodiments of this application, the electronic device may further obtain an ID of a second network cell in which the electronic device is located currently.

In this embodiment of this application, the first network may be an evolution direction of the second network. For example, the first network is a 5G network, and the second network is a 4G network. Alternatively, the first network may be another future network, and the second network is a 5G network. The network performance of the first network is better than the network performance of the second network.

In this embodiment of this application, the electronic device may obtain the second service latency in a specific time period after handing over to the second network. To avoid that measurement of the latency occupies too many resources and affects performance of an entire system, the time period cannot be set too long. To ensure accurate measurement of the latency, the time period cannot be set too short. For example, the time period may be 2 minutes.

With reference to FIG. 1 and FIG. 2, step S303 may be implemented in the following manner: The temperature sensor sends the monitored first temperature to the resource manager, and the resource manager determines a value relationship between the first temperature and the first preset temperature. When the first temperature is greater than the first preset temperature, the resource manager sends a control instruction to the mobile communication module by using the network manager, to trigger network handover. The mobile communication module obtains the second service latency, and the mobile communication module may further send the obtained second service latency to a game application, to display the second service latency on a game interface. S304: The electronic device determines a network handover policy based on the first service latency and the second service latency. With reference to FIG. 1 and FIG. 2, step S304 may be implemented in the following manner: The resource manager determines the network handover policy based on the first service latency and the second service latency that are from the mobile communication module.

In the method for adjusting interface balance provided in this embodiment of this application, when a temperature rise phenomenon occurs when the electronic device runs the first data service in the first network, the electronic device can determine the network handover policy based on latencies of running the first data service in the first network and the second network. Compared with a solution, used in a conventional technology, in which the first network is first reduced to the second network and then a fluency parameter is considered to be reduced, in the method for adjusting interface balance provided in this embodiment of this application, whether to hand over to a network with low network performance can be determined based on the latencies of running the first data service in the first network and the second network, so that freezing or even disconnection that occurs on an interface of the electronic device and that is caused by a network latency increase caused by reducing the first network to the second network when a latency of the first network is less than a latency of the second network can be effectively avoided.

In some embodiments of this application, the network handover policy may include a network priority mechanism or a fluency priority mechanism. The following provides an example of a case in which the network handover policy determined by the electronic device is the network priority mechanism.

In some embodiments of this application, if the first service latency belongs to a first level latency, and the second service latency belongs to a second level latency or a third level latency, or if the first service latency belongs to a second level latency, and the second service latency belongs to a third level latency, the network handover policy determined by the electronic device is the network priority mechanism.

In this embodiment of this application, the first level latency, the second level latency, or the third level latency may be preset by the electronic device. A maximum latency value of the first level latency is less than a minimum latency value of the second level latency, and a maximum latency value of the second level latency is less than a minimum latency value of the third level latency. In this embodiment of this application, different latency ranges are divided based on magnitudes of latencies, including the first level latency, the second level latency, or the third level latency, so that the network handover policy can be determined based on level latencies to which the first service latency and the second service latency belong.

A game service is used as an example. Table 1 shows an example of a relationship between game latencies and game experience.

**Table 1**

| Game latency range | Game experience |
|---|---|
| Greater than 1 ms and less than or equal to 60 ms | Very good. Human-machine interaction is fluent, and a user is almost unaware of a latency |
| Greater than 60 ms and less than or equal to 100 ms | Good. A high-level user can perceive a latency to some extent |
| Greater than 100 ms and less than or equal to 200 ms | Average. There is obvious freezing and occasional disconnection in a confrontation game |
| Greater than 200 ms and less than or equal to 460 ms | Poor. There is obvious latency and freezing, and frequent disconnection |
| 460 ms or more | Very poor. There is disconnection and a game is unable to be played |

With reference to Table 1, for example, the electronic device may preset the first level latency, the second level latency, or the third level latency. As shown in Table 2, the first level latency may be a game latency greater than 1 ms and less than or equal to 100 ms, the second level latency may be a game latency greater than 100 ms and less than or equal to 200 ms, and the third level latency may be a game latency greater than 200 ms.

**Table 2**

| Latency level | Game latency range | Game experience level |
|---|---|---|
| First level latency | Greater than 1 ms and less than or equal to 100 ms | Good |
| Second level latency | Greater than 100 ms and less than or equal to 200 ms | Average |
| Third level latency | Greater than 200 ms | Poor |

In some embodiments of this application, if the first service latency is less than the second service latency, and a difference between the second service latency and the first service latency is greater than or equal to a first threshold, the network handover policy determined by the electronic device is the network priority mechanism.

For example, the first threshold may be set to 100 ms. In this embodiment of this application, the first threshold is set to ensure that the electronic device determines to execute the network priority mechanism only when the first service latency is less than the second service latency and the two latencies are in latency ranges corresponding to different user experience, for example, in different game latency ranges shown in a first column of Table 1. On the contrary, although the first service latency is less than the second service latency, the two latencies are in a latency range corresponding to same user experience, for example, in a same game latency range shown in the first column of Table 1. In this case, the electronic device does not need to execute the network priority mechanism, and does not need to perform subsequent network handover from the second network to the first network, so that frequent network handover can be avoided without affecting user experience.

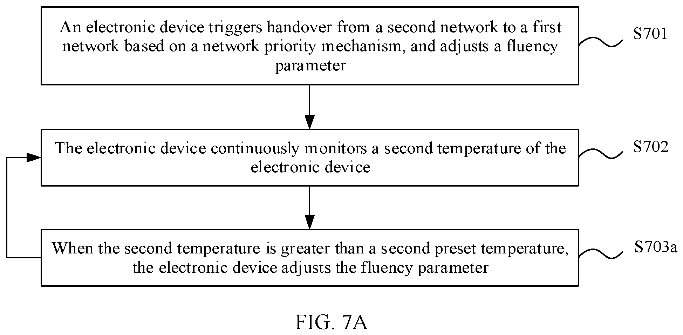

With reference to FIG. 3, in some embodiments of this application, as shown in FIG. 7A, in the second network, when the network handover policy determined by the electronic device based on the first service latency and the second service latency is the network priority mechanism, a specific network handover procedure is described as follows.

S701: The electronic device triggers handover from the second network to the first network based on the network priority mechanism, and adjusts a fluency parameter. In this embodiment of this application, when the network handover policy is the network priority mechanism, the electronic device triggers handover back to the first network with a lower latency, so that freezing or disconnection occurring on the interface of the electronic device can be avoided. In addition, the electronic device resolves a problem of heat generation of the electronic device by adjusting the fluency parameter, thereby avoiding continuous temperature rise of the electronic device.

In some embodiments of this application, the continuous temperature rise of the electronic device may be avoided by adjusting the fluency parameter, for example, reducing a value of the fluency parameter.

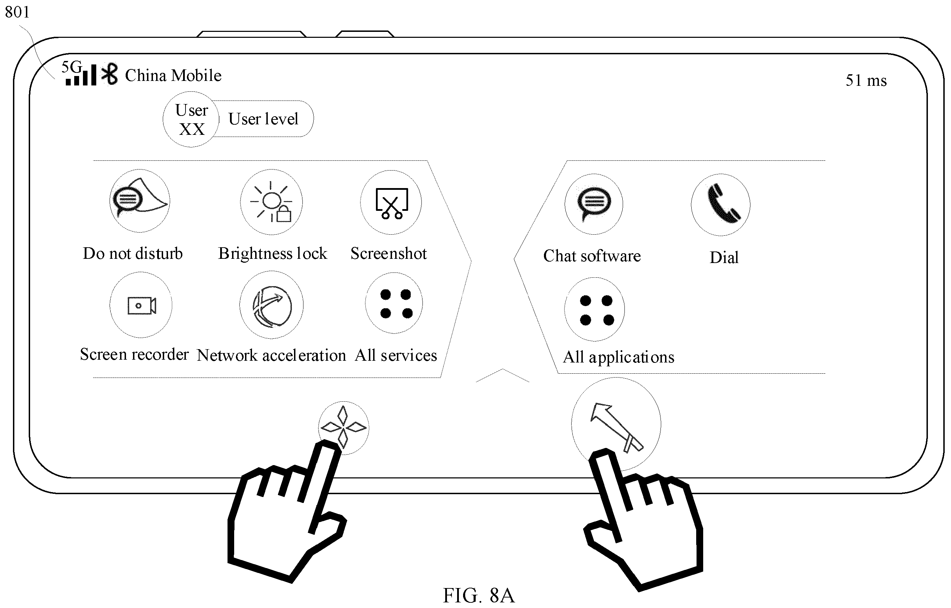

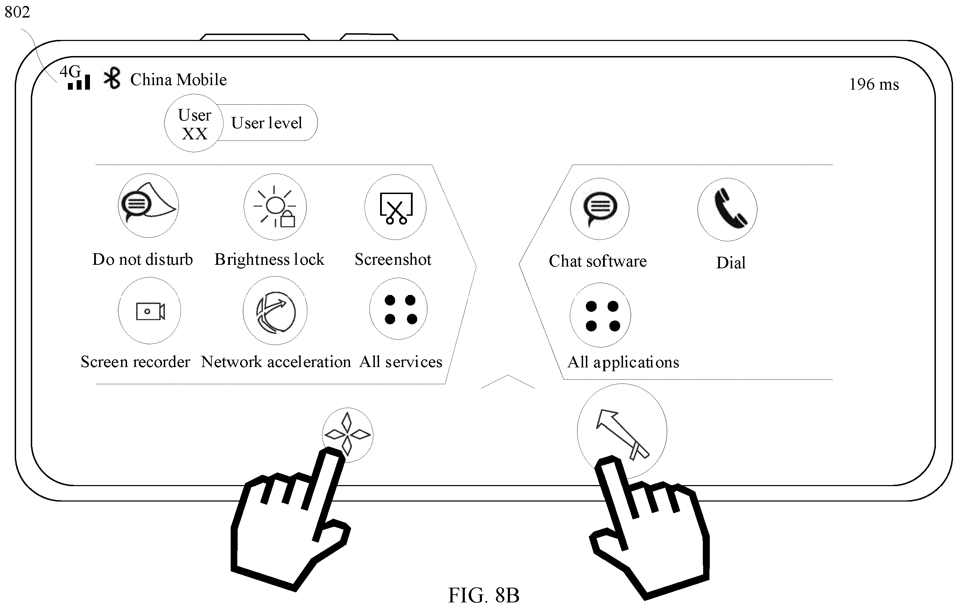

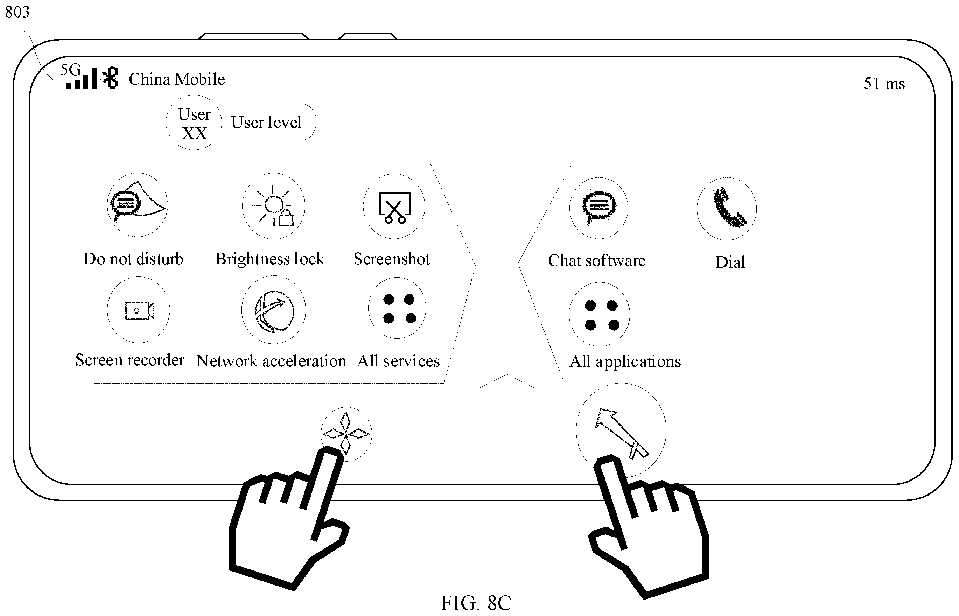

An example in which the first data service is a game service, the first network is a 5G network, and the second network is a 4G network is used for description. As shown in FIG. 8A, a user plays a game in the 5G network, a 5G icon 801 is displayed in an upper left corner of an interface, and a measured network latency displayed in an upper right corner of the interface is 51 ms. As described in step S303, when the temperature of the electronic device is greater than the first preset temperature, the electronic device triggers handover from the 5G network to the 4G network, and a measured 4G network latency is 196 ms. An interface displayed by the electronic device is shown in FIG. 8B, and a 4G icon 802 is displayed in an upper left corner of the interface. In other words, in this example, the first service latency is 51 ms, and the second service latency is 196 ms. With reference to Table 2, the network handover policy determined by the electronic device is the network priority mechanism by determining that 51 ms belongs to the first level latency and 196 ms belongs to the second level latency, or by determining that 196 ms is greater than 51 ms and a difference between 196 ms and 51 ms is 145 ms, which is greater than the first threshold 100 ms. In this way, the electronic device triggers handover from the 4G network to the 5G network based on the network priority mechanism, and adjusts the fluency parameter. For example, if current resolution is 1080P, the current resolution is reduced to 720P. If the current resolution is lower than 1080p, a frequency of a current processor is reduced. Reducing the frequency of the current processor includes: reducing a frequency of a current CPU by 300 MHz, reducing a frequency of a current GPU by 100 MHz, or reducing a frequency of a current GPU by 100 MHz while reducing a frequency of a current processor CPU by 300 MHz. For example, if the frequency of the current CPU is 2.4 GHz, the frequency of the CPU is reduced to 2.1 GHz; or if the frequency of the current GPU is 550 MHz, the frequency of the GPU is reduced to 450 MHz. In this case, an interface displayed by the electronic device is shown in FIG. 8C, and a 5G icon 803 is displayed in an upper left corner of the interface.

It should be noted that FIG. 8A and FIG. 8C show that a 5G signal is full, and FIG. 8B shows that a 4G signal is not full. A quantity of signal bars depends on performance of wireless communication from the electronic device to a network side, for example, a latency or signal strength. The network latency in this application is a latency of connecting the electronic device to a server by using the network side. In other words, a large quantity of signal bars does not indicate a low network latency because the large quantity of signal bars only indicates that a latency from the electronic device to the network side is low, and a latency from the network side to the server may be high. On the contrary, a low network latency indicates a large quantity of signal bars because the low network latency indicates that a latency from the electronic device to the network side and a latency from the network side to the server are low, and a low latency from the electronic device to the network side indicates a large quantity of signal bars.

With reference to FIG. 1 and FIG. 2, step S701 may be implemented in the following manner: The resource manager sends a control instruction to the mobile communication module by using the network manager, to trigger network handover. When adjusting the fluency parameter is reducing a frequency of a CPU, the resource manager sends a control instruction to the CPU, so that the CPU reduces an operation frequency of the CPU. When adjusting the fluency parameter is reducing a frequency of a GPU, the resource manager sends a control instruction to the GPU, so that the GPU reduces an operation frequency of the GPU. When adjusting the fluency parameter is reducing image quality, resolution, or screen brightness, the resource manager sends a control instruction to a display, so that the display reduces the image quality, the resolution, or the screen brightness. When adjusting the fluency parameter is reducing a frame rate, the resource manager reduces the frame rate, and notifies the display to update a refresh frequency, for example, refreshing is performed from once at an interval of 8 ms to once at an interval of 16 ms, and correspondingly, the frame rate is reduced from 120 frames per second to 60 frames per second. S702: The electronic device continuously monitors a second temperature of the electronic device. With reference to FIG. 1 and FIG. 2, step S702 may be implemented in the following manner: A temperature sensor in the sensor module continuously monitors the second temperature of the electronic device.

S703a: When the second temperature is greater than a second preset temperature, the electronic device adjusts the fluency parameter.

In some embodiments of this application, when the electronic device returns to run the first data service in the first network, if a temperature still rises and is greater than the second preset temperature, the electronic device resolves a problem of heat generation of the electronic device by adjusting the fluency parameter, thereby avoiding continuous temperature rise of the electronic device.

In this embodiment of this application, for example, adjusting the fluency parameter by the electronic device may be adjusting a frequency of a current processor or adjusting a current frame rate. For example, reducing the frequency of the current processor, or reducing the current frame rate by 30 frames per second. Reducing the frequency of the current processor includes: reducing a frequency of a current CPU by 300 MHz, reducing a frequency of a current GPU by 100 MHz, or reducing a frequency of a current GPU by 100 MHz while reducing a frequency of a current processor CPU by 300 MHz. For example, if the frequency of the current CPU is 2.1 GHz, the frequency of the CPU is reduced to 1.8 GHz. If the frequency of the current GPU is 450 MHz, the frequency of the GPU is reduced to 350 MHz. If the current frame rate is 120 frames per second, the frame rate is reduced to 90 frames per second.

With reference to FIG. 1 and FIG. 2, step S703 may be implemented in the following manner: The temperature sensor sends the monitored second temperature to the resource manager, and the resource manager determines a value relationship between the second temperature and the second preset temperature. For a specific implementation of adjusting the fluency parameter, refer to the specific implementation of step S701. Details are not described herein again. It should be noted that, after step S703a is performed, step S702 may be cyclically performed to continuously monitor the temperature of the electronic device. In a process of cyclically performing step S702, the second temperature of the electronic device may keep changing. Because step S702 is cyclically performed, step S703a may be repeatedly performed for a plurality of times. Therefore, a plurality of times of adjustment of the fluency parameter may be implemented.

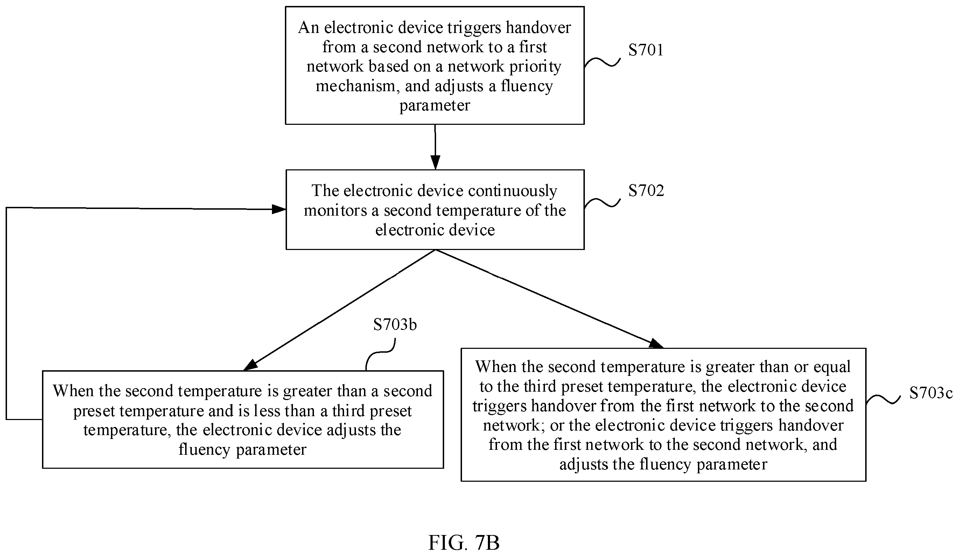

In this embodiment of this application, as shown in FIG. 7B, after step S702, the electronic device continuously monitors the temperature of the electronic device. The electronic device adjusts the fluency parameter based on a monitored change of the second temperature. The detailed adjustment manners are as follows.

S703b: When the second temperature is greater than the second preset temperature and is less than a third preset temperature, the electronic device adjusts the fluency parameter.

In this embodiment of this application, for example, adjusting the fluency parameter by the electronic device may be adjusting a frequency of a current processor or adjusting a current frame rate. For an example of adjusting the fluency parameter in step S703b, refer to the example of adjusting the fluency parameter in step S703a. Details are not described herein again.

In some embodiments of this application, when the electronic device returns to run the first data service in the first network, if a temperature still rises and is between the second preset temperature and the third preset temperature, the electronic device resolves a problem of heat generation of the electronic device by adjusting the fluency parameter, thereby avoiding continuous temperature rise of the electronic device.

With reference to FIG. 1 and FIG. 2, step S703b may be implemented in the following manner: The temperature sensor sends the monitored second temperature to the resource manager, and the resource manager determines a value relationship among the second temperature, the second preset temperature, and the third preset temperature. For a specific implementation of adjusting the fluency parameter, refer to the specific implementation of step S701. Details are not described herein again.

S703c: When the second temperature is greater than or equal to the third preset temperature, the electronic device triggers handover from the first network to the second network; or the electronic device triggers handover from the first network to the second network, and adjusts the fluency parameter. In this embodiment of this application, when the electronic device returns to run the first data service in the first network, if a temperature still rises and is greater than or equal to the third preset temperature after the fluency parameter is adjusted for a plurality of times, the electronic device triggers handover from the first network to the second network, to effectively cool down the electronic device.

In this embodiment of this application, for example, adjusting the fluency parameter by the electronic device may be adjusting a current frame rate. For example, reducing the current frame rate by 30 frames per second. For example, if the current frame rate is 90 frames per second, the frame rate is reduced to 60 frames per second.

With reference to FIG. 1 and FIG. 2, step S703c may be implemented in the following manner: The temperature sensor sends the monitored second temperature to the resource manager, and the resource manager determines a value relationship between the second temperature and the third preset temperature. When the second temperature is greater than or equal to the third preset temperature, the resource manager sends a control instruction to the mobile communication module by using the network manager, to trigger network handover. For a specific implementation of adjusting the fluency parameter, refer to the specific implementation of step S701. Details are not described herein again.

It should be noted that, after step S703b is performed, step S702 may be cyclically performed to continuously monitor the temperature of the electronic device. In one aspect, in a process of cyclically performing step S702, the second temperature of the electronic device keeps changing. In another aspect, because step S702 is cyclically performed, step S703b may be repeatedly performed for a plurality of times. Therefore, a plurality of times of adjustment of the fluency parameter may be implemented. In still another aspect, step S703c may be performed after step S703b is repeatedly performed for one or more times.

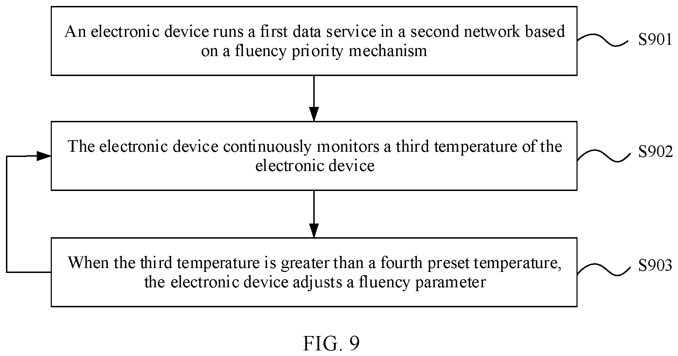

With reference to FIG. 3, in some embodiments of this application, as shown in FIG. 9, in the second network, when the network handover policy determined by the electronic device based on the first service latency and the second service latency is a fluency priority mechanism, a specific network handover manner is described as follows.

S901: The electronic device runs the first data service in the second network based on the fluency priority mechanism.

With reference to FIG. 1 and FIG. 2, step S901 may be implemented in the following manner: The resource manager sends a message to the network manager, so that the network manager determines to run the first data service in the second network.

In this embodiment of this application, after the electronic device determines that the network handover policy is the fluency priority mechanism, the electronic device stays in the second network with a lower latency, so that freezing or disconnection occurring on the interface of the electronic device can be avoided.

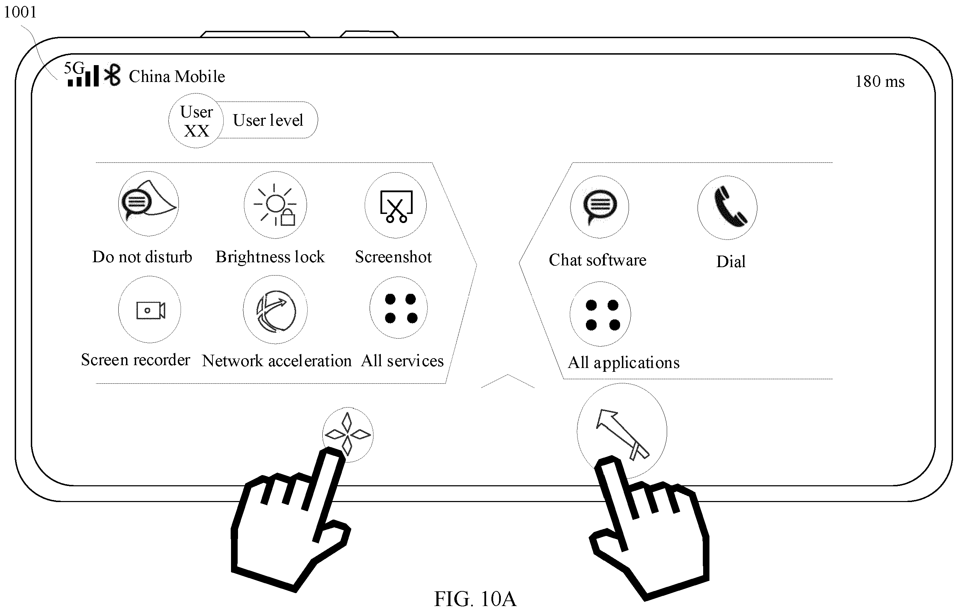

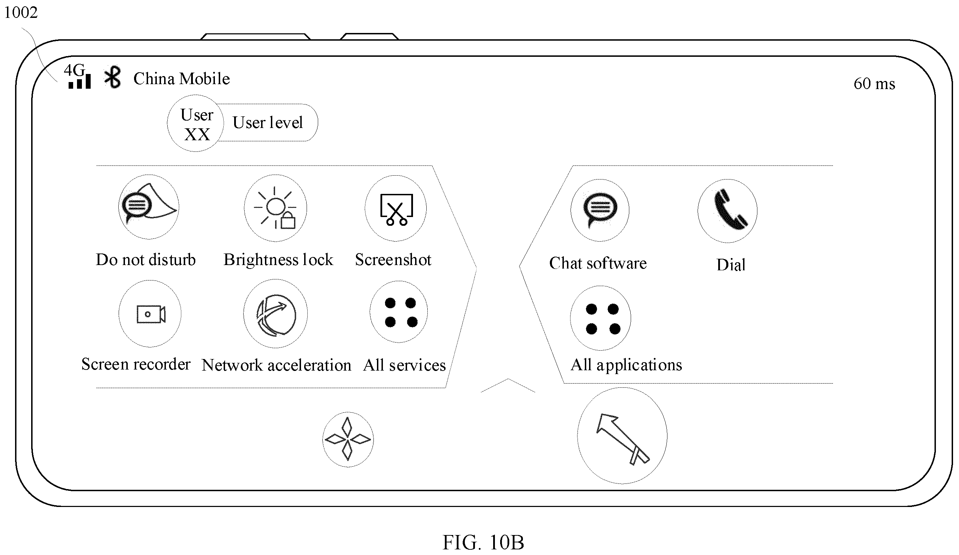

An example in which the first data service is a game service, the first network is a 5G network, and the second network is a 4G network is used for description. As shown in FIG. 10A, a user plays a game in the 5G network, a 5G icon 1001 is displayed in an upper left corner of an interface, and a measured network latency displayed in an upper right corner of the interface is 180 ms. As described in step S303, when the temperature of the electronic device is greater than the first preset temperature, the electronic device triggers handover from the 5G network to the 4G network, and a measured 4G network latency is 60 ms. In this case, an interface displayed by the electronic device is shown in FIG. 10B, and a 4G icon 1002 is displayed in an upper left corner of the interface. In other words, in this example, the first service latency is 180 ms, and the second service latency is 60 ms. With reference to Table 2, the network handover policy determined by the electronic device is the fluency priority mechanism by determining that 180 ms belongs to the second level latency and 60 ms belongs to the first level latency, or by determining that 180 ms is greater than 60 ms and a difference between 180 ms and 60 ms is 120 ms, which is greater than the first threshold 100 ms. Further, the electronic device stays in the 4G network to play a game, and the interface displayed by the electronic device is still shown in FIG. 10B.

S902: The electronic device continuously monitors a third temperature of the electronic device.

With reference to FIG. 1 and FIG. 2, step S902 may be implemented in the following manner: A temperature sensor in the sensor module continuously monitors the third temperature of the electronic device.

S903: When the third temperature is greater than a fourth preset temperature, the electronic device adjusts the fluency parameter.

With reference to FIG. 1 and FIG. 2, step S903 may be implemented in the following manner: The temperature sensor sends the monitored third temperature to the resource manager, and the resource manager determines a value relationship between the third temperature and the fourth preset temperature. For a specific implementation of adjusting the fluency parameter, refer to the specific implementation of step S701. Details are not described herein again.

In this embodiment of this application, after the electronic device determines that the network handover policy is the fluency priority mechanism, the electronic device stays in the second network with a lower latency to run the first data service. If the temperature still rises and is greater than the fourth preset temperature, the electronic device effectively cools down the electronic device by adjusting the fluency parameter.

In this embodiment of this application, for example, adjusting the fluency parameter by the electronic device may be adjusting a frequency of a current processor, adjusting a current frame rate, or adjusting a current screen brightness. For example, reducing the frequency of the current processor, reducing the current frame rate by 30 frames per second, or reducing the current screen brightness by 200 nits. Reducing the frequency of the current processor includes: reducing a frequency of a current CPU by 300 MHz, reducing a frequency of a current GPU by 100 MHz, or reducing a frequency of a current GPU by 100 MHz while reducing a frequency of a current processor CPU by 300 MHz. For example, if the frequency of the current CPU is 2.1 GHz, the frequency of the CPU is reduced to 1.8 GHz. If the frequency of the current GPU is 450 MHz, the frequency of the GPU is reduced to 350 MHz. If the current frame rate is 120 frames per second, the frame rate is reduced to 90 frames per second. If the current screen brightness is 1000 nits, the frame rate is reduced to 800 nits.

It should be noted that, after step S903 is performed, step S902 may be cyclically performed to continuously monitor the temperature of the electronic device. In a process of cyclically performing step S902, the third temperature of the electronic device may keep changing. In addition, because step S902 is cyclically performed, step S903 may be repeatedly performed for a plurality of times. Therefore, a plurality of times of adjustment of the fluency parameter may be implemented.

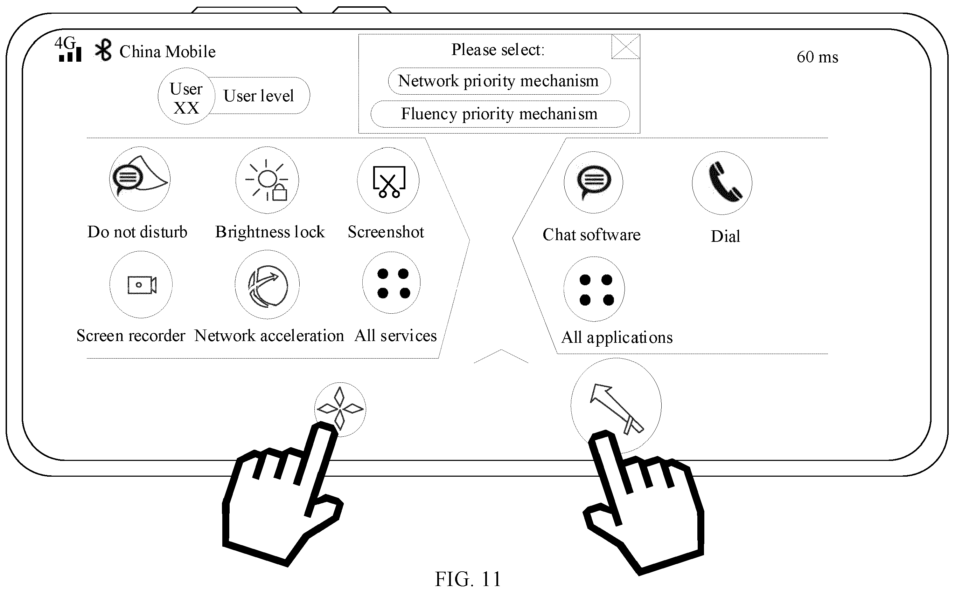

In embodiments shown in FIG. 7A, FIG. 7B, and FIG. 9, the electronic device automatically determines and executes the network handover policy based on latencies in different networks. In some embodiments of this application, the electronic device may further display a pop-up box, to prompt the user to select the network priority mechanism or the fluency priority mechanism, thereby increasing human-machine interaction and improving user experience, as shown in FIG. 11.

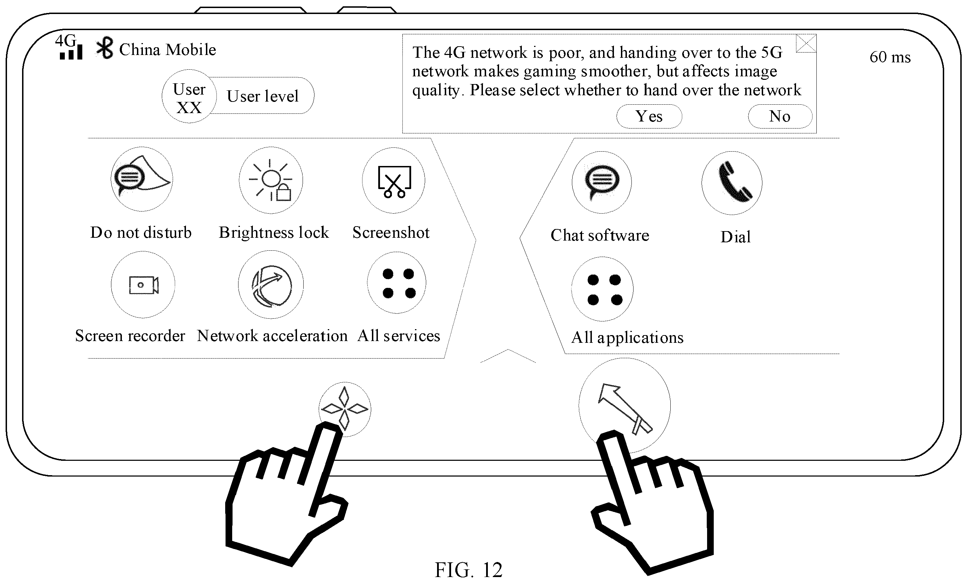

With reference to FIG. 1 and FIG. 2, the foregoing steps may be implemented in the following manner: A display displays the pop-up box, and a touch sensor in the sensor module receives a selection operation of the user. Alternatively, with reference to FIG. 8B, after the network handover policy determined by the electronic device is the network priority mechanism, a pop-up window "The 4G network is poor, and handing over to the 5G network makes gaming smoother, but affects image quality. Please select whether to hand over the network" may be displayed, as shown in FIG. 12. If the user selects "Yes", the embodiment shown in FIG. 7A or FIG. 7B is executed. If the user selects "No", the embodiment shown in FIG. 9 is executed.

For example, the first data service is a game service, the electronic device is a mobile phone, the first network is a 5G network, and the second network is a 4G network. The following provides a specific example of the method for adjusting interface balance provided in this embodiment of this application. The example includes: The mobile phone starts a game in the 5G network, and correspondingly, the mobile phone detects that a current network is the 5G network. The mobile phone obtains a game latency in the 5G network. When a temperature of the mobile phone is greater than 40 degrees, the mobile phone triggers handover from the 5G network to the 4G network. The mobile phone obtains a game latency in the 4G network. The mobile phone determines the network handover policy based on the game latency obtained in the 5G network and the game latency obtained in the 4G network.

If the network handover policy is the network priority mechanism, the mobile phone triggers handover from the 4G network to the 5G network, and reduces resolution or a frequency of a processor. The mobile phone continuously detects the temperature of the mobile phone. When the temperature of the mobile phone is greater than 45 degrees, the frequency of the processor or a frame rate is reduced. When the temperature of the mobile phone is greater than 48 degrees, the mobile phone triggers handover from the 5G network to the 4G network.

If the network handover policy is the fluency priority mechanism, the mobile phone runs the game in the 4G network, and the mobile phone continuously detects the temperature of the mobile phone. As long as the temperature of the mobile phone is greater than 47 degrees, the frequency of the processor, the frame rate, or screen brightness is reduced.

An embodiment of this application discloses an electronic device, including a processor, and a memory, an input device, and an output device that are connected to the processor. The input device and the output device may be integrated into one device. For example, a touch sensor (touch sensor or touch panel) may be used as an input device, a display (display) may be used as an output device, and the touch sensor and the display are integrated into a touchscreen (touch screen).

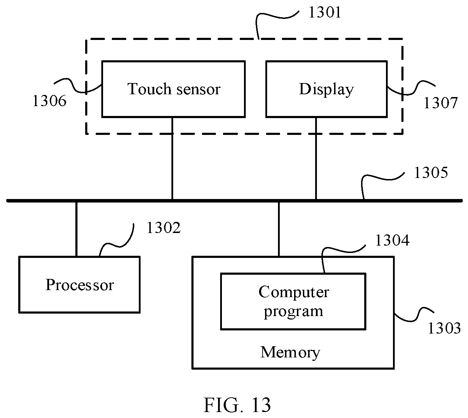

As shown in FIG. 13, the electronic device may include a touchscreen 1301. The touchscreen 1301 includes a touch sensor 1306, a display 1307, one or more processors 1302, a memory 1303, one or more applications (not shown), and one or more computer programs 1304. The foregoing components may be connected by using one or more communication buses 1305. Certainly, the electronic device may further include a communication module and another component.

The one or more computer programs 1304 are stored in the memory 1303 and are configured to be executed by the one or more processors 1302. The one or more computer programs 1304 include instructions, and the instructions may be used to perform the steps in the foregoing embodiments. All related content of the steps in the foregoing method embodiments may be cited in function descriptions of corresponding physical components. Details are not described herein again.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above. For a detailed working process of the foregoing system, apparatus, and units, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application, but the protection scope of embodiments of this application is not limited thereto. Any variation or replacement within the technical scope disclosed in embodiments of this application shall fall within the protection scope of embodiments of this application. Therefore, the protection scope of the embodiments of this application shall be subject to the protection scope of the claims.

## Claims

1. A method for adjusting interface balance, wherein the method is applied to an electronic device and comprises:
in response to an operation of enabling a first data service by a user, detecting (S301), by the electronic device, a current network;
if the current network is a first network, obtaining (S302), by the electronic device, a first service latency of running the first data service in the first network by the electronic device, and continuously monitoring a first temperature of the electronic device;
when the first temperature is greater than a first preset temperature, triggering (S303), by the electronic device, handover from the first network to a second network, and obtaining a second service latency of running the first data service in the second network by the electronic device, wherein network performance of the first network is higher than network performance of the second network; and
determining (S304), by the electronic device, a network handover policy based on the first service latency and the second service latency, wherein the network handover policy comprises a network priority mechanism, and the method further comprises:
triggering, by the electronic device, handover from the second network to the first network based on the network priority mechanism, and adjusting a fluency parameter.

2. The method according to claim 1, wherein the triggering, by the electronic device, handover from the second network to the first network based on the network priority mechanism, and adjusting a fluency parameter comprises:
if the first service latency belongs to a first level latency, and the second service latency belongs to a second level latency or a third level latency, triggering, by the electronic device, handover from the second network to the first network based on the network priority mechanism, and adjusting the fluency parameter; or
if the first service latency belongs to the second level latency, and the second service latency belongs to the third level latency, triggering, by the electronic device, handover from the second network to the first network based on the network priority mechanism, and adjusting the fluency parameter.

3. The method according to claim 2, wherein latency levels preset by the electronic device comprise the first level latency, the second level latency, or the third level latency, wherein a maximum latency value of the first level latency is less than a minimum latency value of the second level latency, and a maximum latency value of the second level latency is less than a minimum latency value of the third level latency.

4. The method according to claim 1, wherein the triggering, by the electronic device, handover from the second network to the first network based on the network priority mechanism, and adjusting a fluency parameter comprises:
if the first service latency is less than the second service latency, and a difference between the second service latency and the first service latency is greater than or equal to a first threshold, triggering, by the electronic device, handover from the second network to the first network based on the network priority mechanism, and adjusting the fluency parameter.

5. The method according to any one of claims 1 to 4, wherein the method further comprises:
after the triggering, by the electronic device, handover from the second network to the first network based on the network priority mechanism, continuously monitoring, by the electronic device, a second temperature of the electronic device; and
when the second temperature is greater than a second preset temperature, adjusting, by the electronic device, the fluency parameter.

6. The method according to any one of claims 1 to 5, wherein the method further comprises:
after the triggering, by the electronic device, handover from the second network to the first network based on the network priority mechanism, continuously monitoring, by the electronic device, a second temperature of the electronic device; and
when the second temperature is greater than a second preset temperature and is less than a third preset temperature, adjusting, by the electronic device, the fluency parameter; or
when the second temperature is greater than or equal to the third preset temperature, triggering, by the electronic device, handover from the first network to the second network; or triggering, by the electronic device, handover from the first network to the second network, and adjusting the fluency parameter.

7. A method for adjusting interface balance, wherein the method is applied to an electronic device and comprises:
in response to an operation of enabling a first data service by a user, detecting (S301), by the electronic device, a current network;
if the current network is a first network, obtaining (S302), by the electronic device, a first service latency of running the first data service in the first network by the electronic device, and continuously monitoring a first temperature of the electronic device;
when the first temperature is greater than a first preset temperature, triggering (S303), by the electronic device, handover from the first network to a second network, and obtaining a second service latency of running the first data service in the second network by the electronic device, wherein network performance of the first network is higher than network performance of the second network; and
determining (S304), by the electronic device, a network handover policy based on the first service latency and the second service latency, wherein the network handover policy further comprises a fluency priority mechanism, and the method further comprises:
running, by the electronic device, the first data service in the second network based on the fluency priority mechanism.

8. The method according to claim 7, wherein the running, by the electronic device, the first data service in the second network based on the fluency priority mechanism comprises:
if the second service latency belongs to a first level latency, and the first service latency belongs to a second level latency or a third level latency, running, by the electronic device, the first data service in the second network based on the fluency priority mechanism; or
if the second service latency belongs to the second level latency, and the first service latency belongs to the third level latency, running, by the electronic device, the first data service in the second network based on the fluency priority mechanism.

9. The method according to claim 8, wherein latency levels preset by the electronic device comprise the first level latency, the second level latency, or the third level latency, wherein a maximum latency value of the first level latency is less than a minimum latency value of the second level latency, and a maximum latency value of the second level latency is less than a minimum latency value of the third level latency.

10. The method according to claim 7, wherein the running, by the electronic device, the first data service in the second network based on the fluency priority mechanism comprises:
if the first service latency is greater than the second service latency, and a difference between the first service latency and the second service latency is greater than or equal to a first threshold, running, by the electronic device, the first data service in the second network based on the fluency priority mechanism.

11. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 1 to 6 or according to any one of claims 7 to 10.

12. A computer-readable storage medium, wherein the computer-readable storage medium stores a computer program or instructions, and when the computer program or the instructions are run on a computer, the computer is enabled to perform the method according to any one of claims 1 to 6 or according to any one of claims 7 to 10.

13. A chip system, wherein the chip system comprises a processing circuit and a storage medium, the storage medium stores computer program code, and when the computer program code is executed by the processing circuit, the method according to any one of claims 1 to 6 or according to any one of claims 7 to 10 is implemented.

14. A computer program product, wherein the computer program product comprises a computer program or instructions, and when the computer program or the instructions are run on a computer, the computer is enabled to perform the method according to any one of claims 1 to 6 or according to any one of claims 7 to 10.

## Patentansprüche

1. Verfahren zum Anpassen eines Schnittstellengleichgewichts, wobei das Verfahren auf eine elektronische Vorrichtung angewendet wird und Folgendes umfasst:
als Reaktion auf eine Operation von Aktivieren eines ersten Datendienstes durch einen Benutzer, Erkennen (S301), durch die elektronische Vorrichtung, eines aktuellen Netzwerks;
wenn es sich bei dem aktuellen Netzwerk um ein erstes Netzwerk handelt, Erlangen (S302), durch die elektronische Vorrichtung, einer ersten Dienstlatenz von Umsetzen des ersten Datendienstes in dem ersten Netzwerk durch die elektronische Vorrichtung und kontinuierliches Überwachen einer ersten Temperatur der elektronischen Vorrichtung;
wenn die erste Temperatur größer ist als eine erste voreingestellte Temperatur, Auslösen (S303), durch die elektronische Vorrichtung, einer Übergabe von dem ersten Netzwerk an ein zweites Netzwerk und Erlangen einer zweiten Dienstlatenz von Umsetzen des ersten Datendienstes in dem zweiten Netzwerk durch die elektronische Vorrichtung, wobei eine Netzwerkleistung des ersten Netzwerks höher ist als eine Netzwerkleistung des zweiten Netzwerks; und
Bestimmen (S304), durch die elektronische Vorrichtung, einer Netzwerkübergaberichtlinie basierend auf der ersten Dienstlatenz und der zweiten Dienstlatenz, wobei die Netzwerkübergaberichtlinie einen Netzwerkprioritätsmechanismus umfasst und das Verfahren ferner Folgendes umfasst:
Auslösen, durch die elektronische Vorrichtung, einer Übergabe von dem zweiten Netzwerk zu dem ersten Netzwerk basierend auf dem Netzwerkprioritätsmechanismus und Anpassen eines Flussparameters.

2. Verfahren nach Anspruch 1, wobei das Auslösen, durch die elektronische Vorrichtung, einer Übergabe von dem zweiten Netzwerk zu dem ersten Netzwerk basierend auf dem Netzwerkprioritätsmechanismus und das Anpassen eines Flussparameters Folgendes umfasst:
wenn die erste Dienstlatenz zu einer Latenz ersten Niveaus gehört und die zweite Dienstlatenz zu einer Latenz zweiten Niveaus oder einer Latenz dritten Niveaus gehört, Auslösen, durch die elektronische Vorrichtung, einer Übergabe von dem zweiten Netzwerk zu dem ersten Netzwerk basierend auf dem Netzwerkprioritätsmechanismus und Anpassen des Flussparameters; oder
wenn die erste Dienstlatenz zu der Latenz zweiten Niveaus gehört und die zweite Dienstlatenz zu der Latenz dritten Niveaus gehört, Auslösen, durch die elektronische Vorrichtung einer Übergabe von dem zweiten Netzwerk zu dem ersten Netzwerk basierend auf dem Netzwerkprioritätsmechanismus und Anpassen des Flussparameters.

3. Verfahren nach Anspruch 2, wobei Latenzniveaus, die durch die elektronische Vorrichtung voreingestellt sind, die Latenz ersten Niveaus, die Latenz zweiten Niveaus oder die Latenz dritten Niveaus umfassen, wobei ein maximaler Latenzwert der Latenz ersten Niveaus kleiner ist als ein minimaler Latenzwert der Latenz zweiten Niveaus und ein maximaler Latenzwert der Latenz zweiten Niveaus kleiner ist als ein minimaler Latenzwert der Latenz dritten Niveaus.

4. Verfahren nach Anspruch 1, wobei das Auslösen, durch die elektronische Vorrichtung, einer Übergabe von dem zweiten Netzwerk zu dem ersten Netzwerk basierend auf dem Netzwerkprioritätsmechanismus und das Anpassen eines Flussparameters Folgendes umfasst:
wenn die erste Dienstlatenz kleiner ist als die zweite Dienstlatenz und eine Differenz zwischen der zweiten Dienstlatenz und der ersten Dienstlatenz größer oder gleich einem ersten Schwellenwert ist, Auslösen, durch die elektronische Vorrichtung, einer Übergabe von dem zweiten Netzwerk zu dem ersten Netzwerk basierend auf dem Netzwerkprioritätsmechanismus und Anpassen des Flussparameters.

5. Verfahren nach einem der Ansprüche 1 bis 4, wobei das Verfahren ferner Folgendes umfasst:
nach dem Auslösen, durch die elektronische Vorrichtung, einer Übergabe von dem zweiten Netzwerk zu dem ersten Netzwerk basierend auf dem Netzwerkprioritätsmechanismus, kontinuierliches Überwachen, durch die elektronische Vorrichtung, einer zweiten Temperatur der elektronischen Vorrichtung; und,
wenn die zweite Temperatur höher als eine zweite voreingestellte Temperatur ist, Anpassen, durch die elektronische Vorrichtung, des Flussparameters.

6. Verfahren nach einem der Ansprüche 1 bis 5, wobei das Verfahren ferner Folgendes umfasst:
nach dem Auslösen, durch die elektronische Vorrichtung, einer Übergabe von dem zweiten Netzwerk zu dem ersten Netzwerk basierend auf dem Netzwerkprioritätsmechanismus, kontinuierliches Überwachen, durch die elektronische Vorrichtung, einer zweiten Temperatur der elektronischen Vorrichtung; und,
wenn die zweite Temperatur höher als eine zweite voreingestellte Temperatur ist und niedriger als eine dritte voreingestellte Temperatur ist, Anpassen, durch die elektronische Vorrichtung, des Flussparameters; oder,
wenn die zweite Temperatur höher als oder gleich der dritten voreingestellten Temperatur ist, Auslösen, durch die elektronische Vorrichtung, einer Übergabe von dem ersten Netzwerk zu dem zweiten Netzwerk; oder Auslösen, durch die elektronische Vorrichtung, einer Übergabe von dem ersten Netzwerk zu dem zweiten Netzwerk und Anpassen des Flussparameters.

7. Verfahren zum Anpassen eines Schnittstellengleichgewichts, wobei das Verfahren auf eine elektronische Vorrichtung angewendet wird und Folgendes umfasst:
als Reaktion auf eine Operation von Aktivieren eines ersten Datendienstes durch einen Benutzer, Erkennen (S301), durch die elektronische Vorrichtung, eines aktuellen Netzwerks;
wenn es sich bei dem aktuellen Netzwerk um ein erstes Netzwerk handelt, Erlangen (S302), durch die elektronische Vorrichtung, einer ersten Dienstlatenz von Umsetzen des ersten Datendienstes in dem ersten Netzwerk durch die elektronische Vorrichtung und kontinuierliches Überwachen einer ersten Temperatur der elektronischen Vorrichtung;
wenn die erste Temperatur größer ist als eine erste voreingestellte Temperatur, Auslösen (S303), durch die elektronische Vorrichtung, einer Übergabe von dem ersten Netzwerk an ein zweites Netzwerk und Erlangen einer zweiten Dienstlatenz von Umsetzen des ersten Datendienstes in dem zweiten Netzwerk durch die elektronische Vorrichtung, wobei eine Netzwerkleistung des ersten Netzwerks höher ist als eine Netzwerkleistung des zweiten Netzwerks; und
Bestimmen (S304), durch die elektronische Vorrichtung, einer Netzwerkübergaberichtlinie basierend auf der ersten Dienstlatenz und der zweiten Dienstlatenz, wobei die Netzwerkübergaberichtlinie ferner einen Flussprioritätsmechanismus umfasst und das Verfahren ferner Folgendes umfasst:
Umsetzen, durch die elektronische Vorrichtung, des ersten Datendienstes in dem zweiten Netzwerk basierend auf dem Flussprioritätsmechanismus.

8. Verfahren nach Anspruch 7, wobei das Umsetzen, durch die elektronische Vorrichtung, des ersten Datendienstes in dem zweiten Netzwerk basierend auf dem Flussprioritätsmechanismus Folgendes umfasst:
wenn die Latenz des zweiten Dienstes zu einer Latenz ersten Niveaus gehört und die Latenz des ersten Dienstes zu einer Latenz zweiten Niveaus oder einer Latenz dritten Niveaus gehört, Umsetzen, durch die elektronische Vorrichtung, des ersten Datendienstes in dem zweiten Netzwerk basierend auf dem Flussprioritätsmechanismus; oder
wenn die Latenz des zweiten Dienstes zu der Latenz zweiten Niveaus gehört und die Latenz des ersten Dienstes zu der Latenz dritten Niveaus gehört, Umsetzen, durch die elektronische Vorrichtung, des ersten Datendienstes in dem zweiten Netzwerk basierend auf dem Flussprioritätsmechanismus.

9. Verfahren nach Anspruch 8, wobei Latenzniveaus, die durch die elektronische Vorrichtung voreingestellt sind, die Latenz ersten Niveaus, die Latenz zweiten Niveaus oder die Latenz dritten Niveaus umfassen, wobei ein maximaler Latenzwert der Latenz ersten Niveaus kleiner ist als ein minimaler Latenzwert der Latenz zweiten Niveaus und ein maximaler Latenzwert der Latenz zweiten Niveaus kleiner ist als ein minimaler Latenzwert der Latenz dritten Niveaus.

10. Verfahren nach Anspruch 7, wobei das Umsetzen, durch die elektronische Vorrichtung, des ersten Datendienstes in dem zweiten Netzwerk basierend auf dem Flussprioritätsmechanismus Folgendes umfasst:
wenn die Latenz des ersten Dienstes größer ist als die Latenz des zweiten Dienstes und eine Differenz zwischen der Latenz des ersten Dienstes und der Latenz des zweiten Dienstes größer oder gleich einem ersten Schwellenwert ist, Umsetzen, durch die elektronische Vorrichtung, des ersten Datendienstes in dem zweiten Netzwerk basierend auf dem Flussprioritätsmechanismus.

11. Elektronische Vorrichtung, umfassend einen Prozessor, einen Speicher und ein Display, wobei der Speicher und das Display mit dem Prozessor gekoppelt sind, der Speicher dazu konfiguriert ist, Computerprogrammcode zu speichern, der Computerprogrammcode Computeranweisungen umfasst und, wenn der Prozessor die Computeranweisungen in dem Speicher liest, die elektronische Vorrichtung dazu in die Lage versetzt wird, das Verfahren nach einem der Ansprüche 1 bis 6 oder nach einem der Ansprüche 7 bis 10 durchzuführen.

12. Computerlesbares Speichermedium, wobei das computerlesbare Speichermedium ein Computerprogramm oder Anweisungen speichert und, wenn das Computerprogramm oder die Anweisungen auf einem Computer umgesetzt werden, der Computer in die Lage versetzt wird, das Verfahren nach einem der Ansprüche 1 bis 6 oder nach einem der Ansprüche 7 bis 10 durchzuführen.

13. Chipsystem, wobei das Chipsystem eine Verarbeitungsschaltung und ein Speichermedium umfasst, das Speichermedium Computerprogrammcode speichert und, wenn der Computerprogrammcode durch die Verarbeitungsschaltung ausgeführt wird, das Verfahren nach einem der Ansprüche 1 bis 6 oder nach einem der Ansprüche 7 bis 10 implementiert wird.

14. Computerprogrammprodukt, wobei das Computerprogrammprodukt ein Computerprogramm oder Anweisungen umfasst und, wenn das Computerprogramm oder die Anweisungen auf einem Computer umgesetzt werden, der Computer in die Lage versetzt wird, das Verfahren nach einem der Ansprüche 1 bis 6 oder nach einem der Ansprüche 7 bis 10 durchzuführen.

## Revendications

1. Procédé de réglage de l'équilibre d'interface, dans lequel le procédé est appliqué à un dispositif électronique et comprend :
en réponse à une opération d'activation d'un premier service de données par un utilisateur, la détection (S301), par le dispositif électronique, d'un réseau actuel ;
si le réseau actuel est un premier réseau, l'obtention (S302), par le dispositif électronique, d'une latence de premier service pour l'exécution du premier service de données dans le premier réseau par le dispositif électronique, et la surveillance en continu d'une première température du dispositif électronique ;
lorsque la première température est supérieure à une première température prédéfinie, le déclenchement (S303), par le dispositif électronique, d'un transfert du premier réseau vers un second réseau, et l'obtention d'une latence de second service pour l'exécution du premier service de données dans le second réseau par le dispositif électronique, dans lequel les performances réseau du premier réseau sont supérieures aux performances réseau du second réseau ; et
la détermination (S304), par le dispositif électronique, d'une politique de transfert de réseau sur la base de la latence de premier service et de la latence de second service, dans lequel la politique de transfert de réseau comprend un mécanisme de priorité réseau, et le procédé comprend également :
le déclenchement, par le dispositif électronique, d'un transfert du second réseau vers le premier réseau sur la base du mécanisme de priorité réseau, et le réglage d'un paramètre de fluidité.

2. Procédé selon la revendication 1, dans lequel le déclenchement, par le dispositif électronique, d'un transfert du second réseau vers le premier réseau sur la base du mécanisme de priorité réseau, et le réglage d'un paramètre de fluidité comprend :
si la latence de premier service appartient à une latence de premier niveau, et que la latence de second service appartient à une latence de deuxième niveau ou à une latence de troisième niveau, le déclenchement, par le dispositif électronique, d'un transfert du second réseau vers le premier réseau sur la base du mécanisme de priorité réseau, et le réglage du paramètre de fluidité ; ou
si la latence de premier service appartient à la latence de deuxième niveau, et que la latence de second service appartient à la latence de troisième niveau, le déclenchement, par le dispositif électronique, d'un transfert du second réseau vers le premier réseau sur la base du mécanisme de priorité réseau, et le réglage du paramètre de fluidité.

3. Procédé selon la revendication 2, dans lequel les niveaux de latence prédéfinis par le dispositif électronique comprennent la latence de premier niveau, la latence de deuxième niveau, ou la latence de troisième niveau, dans lequel une valeur de latence maximale de la latence de premier niveau est inférieure à une valeur de latence minimale de la latence de deuxième niveau, et une valeur de latence maximale de la latence de deuxième niveau est inférieure à une valeur de latence minimale de la latence de troisième niveau.

4. Procédé selon la revendication 1, dans lequel le déclenchement, par le dispositif électronique, d'un transfert du second réseau vers le premier réseau sur la base du mécanisme de priorité réseau, et le réglage d'un paramètre de fluidité comprend :
si la latence de premier service est inférieure à la latence de second service, et qu'une différence entre la latence de second service et la latence de premier service est supérieure ou égale à un premier seuil, le déclenchement, par le dispositif électronique, d'un transfert du second réseau vers le premier réseau sur la base du mécanisme de priorité réseau, et le réglage du paramètre de fluidité.

5. Procédé selon l'une quelconque des revendications 1 à 4, dans lequel le procédé comprend également :
après le déclenchement, par le dispositif électronique, d'un transfert du second réseau vers le premier réseau sur la base du mécanisme de priorité réseau, la surveillance en continu, par le dispositif électronique, d'une seconde température du dispositif électronique ; et
lorsque la seconde température est supérieure à une deuxième température prédéfinie, le réglage, par le dispositif électronique, du paramètre de fluidité.

6. Procédé selon l'une quelconque des revendications 1 à 5, dans lequel le procédé comprend également :
après le déclenchement, par le dispositif électronique, d'un transfert du second réseau vers le premier réseau sur la base du mécanisme de priorité réseau, la surveillance en continu, par le dispositif électronique, d'une seconde température du dispositif électronique ; et
lorsque la seconde température est supérieure à une deuxième température prédéfinie et est inférieure à une troisième température prédéfinie, le réglage, par le dispositif électronique, du paramètre de fluidité ; ou
lorsque la seconde température est supérieure ou égale à la troisième température prédéfinie, le déclenchement, par le dispositif électronique, d'un transfert du premier réseau vers le second réseau ; ou le déclenchement, par le dispositif électronique, d'un transfert du premier réseau vers le second réseau, et le réglage du paramètre de fluidité.

7. Procédé de réglage de l'équilibre d'interface, dans lequel le procédé est appliqué à un dispositif électronique et comprend :
en réponse à une opération d'activation d'un premier service de données par un utilisateur, la détection (S301), par le dispositif électronique, d'un réseau actuel ;
si le réseau actuel est un premier réseau, l'obtention (S302), par le dispositif électronique, d'une latence de premier service pour l'exécution du premier service de données dans le premier réseau par le dispositif électronique, et la surveillance en continu d'une première température du dispositif électronique ;
lorsque la première température est supérieure à une première température prédéfinie, le déclenchement (S303), par le dispositif électronique, d'un transfert du premier réseau vers un second réseau, et l'obtention d'une latence de second service pour l'exécution du premier service de données dans le second réseau par le dispositif électronique, dans lequel les performances réseau du premier réseau sont supérieures aux performances réseau du second réseau ; et
la détermination (S304), par le dispositif électronique, d'une politique de transfert de réseau sur la base de la latence de premier service et de la latence de second service, dans lequel la politique de transfert de réseau comprend également un mécanisme de priorité réseau, et le procédé comprend également :
l'exécution, par le dispositif électronique, du premier service de données dans le second réseau sur la base du mécanisme de priorité de fluidité.

8. Procédé selon la revendication 7, dans lequel l'exécution, par le dispositif électronique, du premier service de données dans le second réseau sur la base du mécanisme de priorité de fluidité comprend :
si la latence de second service appartient à une latence de premier niveau, et que la latence de premier service appartient à une latence de deuxième niveau ou à une latence de troisième niveau, l'exécution, par le dispositif électronique, du premier service de données dans le second réseau sur la base du mécanisme de priorité de fluidité ; ou
si la latence de second service appartient à la latence de deuxième niveau, et que la latence de premier service appartient à la latence de troisième niveau, l'exécution, par le dispositif électronique, du premier service de données dans le second réseau sur la base du mécanisme de priorité de fluidité.

9. Procédé selon la revendication 8, dans lequel les niveaux de latence prédéfinis par le dispositif électronique comprennent la latence de premier niveau, la latence de deuxième niveau, ou la latence de troisième niveau, dans lequel une valeur de latence maximale de la latence de premier niveau est inférieure à une valeur de latence minimale de la latence de deuxième niveau, et une valeur de latence maximale de la latence de deuxième niveau est inférieure à une valeur de latence minimale de la latence de troisième niveau.

10. Procédé selon la revendication 7, dans lequel l'exécution, par le dispositif électronique, du premier service de données dans le second réseau sur la base du mécanisme de priorité de fluidité comprend :
si la latence de premier service est supérieure à la latence de second service, et si la différence entre la latence de premier service et la latence de second service est supérieure ou égale à un premier seuil, l'exécution, par le dispositif électronique, du premier service de données dans le second réseau sur la base du mécanisme de priorité de fluidité.

11. Dispositif électronique comprenant un processeur, une mémoire, et un écran, dans lequel la mémoire et l'écran sont couplés au processeur, la mémoire est configurée pour stocker un code de programme informatique, le code de programme informatique comprend des instructions informatiques, et lorsque le processeur lit les instructions informatiques à partir de la mémoire, le dispositif électronique est activé pour réaliser le procédé selon l'une quelconque des revendications 1 à 6 ou selon l'une quelconque des revendications 7 à 10.

12. Support de stockage lisible par ordinateur, dans lequel le support de stockage lisible par ordinateur stocke un programme informatique ou des instructions, et lorsque le programme informatique ou les instructions sont exécutés sur un ordinateur, l'ordinateur est activé pour réaliser le procédé selon l'une quelconque des revendications 1 à 6 ou selon l'une quelconque des revendications 7 à 10.

13. Système à puce, dans lequel le système à puce comprend un circuit de traitement et un support de stockage, le support de stockage stocke un code de programme informatique, et lorsque le code de programme informatique est exécuté par le circuit de traitement, le procédé selon l'une quelconque des revendications 1 à 6 ou selon l'une quelconque des revendications 7 à 10 est mis en œuvre.

14. Produit de programme informatique, dans lequel le produit de programme informatique comprend un programme informatique ou des instructions, et lorsque le programme informatique ou les instructions sont exécutés sur un ordinateur, l'ordinateur est activé pour réaliser le procédé selon l'une quelconque des revendications 1 à 6 ou selon l'une quelconque des revendications 7 à 10.
